# EUROPEAN PATENT SPECIFICATION

(11) **EP 4 104 465 B1**
(45) Date of publication and mention of the grant of the patent: **31.01.2024**
(21) Application number: 21704521.0
(22) Date of filing: 10.02.2021
(51) Int. Cl.: H04W 4/40

(54) **TELE-OPERATED DRIVING EVENT PREDICTION, ADAPTION AND TRIGGER**
TELEBETRIEBENE FAHREREIGNISVORHERSAGE, ADAPTION UND AUSLÖSUNG
PRÉDICTION, ADAPTATION ET DÉCLENCHEMENT D'ÉVÉNEMENTS DE CONDUITE TÉLÉCOMMANDÉE

(30) Priority: 16.02.2020 US 202062977322 P
(43) Date of publication of application: 21.12.2022
(73) Proprietor: Telefonaktiebolaget LM ERICSSON (PUBL), 16483 Stockholm (SE)
(72) Inventor: EL, ESSAILI, Ali, 52072 Aachen (DE); ZANG, Yunpeng, 52142 Wuerselen (DE); CONDOLUCI, Massimo, 16931 Solna (SE)
(74) Representative: Ericsson
(86) International application number: PCT/EP2021/053186
(87) International publication number: WO 2021/160662

(56) References cited:
- ERICSSON: "Pseudo-CR on triggering tele-operated driving support", 3GPP DRAFT; S6-200382, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG6, no. E-meeting; 20200224 - 20200228 18 February 2020 (2020-02-18), XP051855173, Retrieved from the Internet: URL:https://ftp.3gpp.org/tsg_sa/WG6_Missio nCritical/TSGS6_036e/Docs/S6-200382.zip S6-200382 pCR on triggering tele-operated driving support.doc [retrieved on 2020-02-18]
- ERICSSON: "Pseudo-CR on triggering tele-operated driving support", 3GPP DRAFT; S6-200413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG6, no. E-meeting; 20200224 - 20200228 3 March 2020 (2020-03-03), XP051858930, Retrieved from the Internet: URL:https://ftp.3gpp.org/tsg_sa/WG6_Missio nCritical/TSGS6_036e/Docs/S6-200413.zip S6-200413_was_S6-200382 pCR on triggering tele-operated driving support.doc [retrieved on 2020-03-03]
- "3rd Generation Partnership Project; Technical Specification Group Services and System Aspects; Study on enhancements to application layer support for V2X services; (Release 17)", 3GPP DRAFT; 23764-040, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 27 January 2020 (2020-01-27), XP051867000, Retrieved from the Internet: URL:https://ftp.3gpp.org/tsg_sa/WG6_Missio nCritical/Latest_draft_SA6_Specs/archive/2 3764-040.zip 23764-040-rm.doc [retrieved on 2020-01-27]
- 5GAA WG2: "LS to 3GPP on QoS Prediction", 3GPP DRAFT; S6-180751_5GAA_A-180156_NESQO_LS TO 3GPP ON QOS PREDICTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. SA WG6, no. Osaka, Japan; 20180521 - 20180525 4 May 2018 (2018-05-04), XP051450103, Retrieved from the Internet: URL:http://www.3gpp.org/ftp/tsg%5Fsa/WG6%5 FMissionCritical/TSGS6%5F024%5FOsaka/docs/ [retrieved on 2018-05-04]
- 5GAA WG2: "LS on Requirements to enable Predictive QoS for Automotive industry", 3GPP DRAFT; S2-1810010_S2-188359_5GAA_A-180265, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Dongguan, P. R. China; 20181015 - 20181019 19 September 2018 (2018-09-19), XP051539008, Retrieved from the Internet: URL:http://www.3gpp.org/ftp/tsg%5Fsa/WG2%5 FArch/TSGS2%5F129%5FDongguan/Docs/S2%2D181 0010%2Ezip [retrieved on 2018-09-19]

## Description

The present disclosure relates generally to communications, and more particularly to communication methods and related devices and nodes supporting tele-operated driving (ToD).

Related standardization work will now be described.

Tele-operated support (TeSo) is defined in 3GPP TR 22.886 (Clause 5.21) and the corresponding requirements are in clause 7.2.5 for remote driving. Normative requirements are in 3GPP SA1 TS 22.186, Service requirements for enhanced Vehicle to Everything (V2X) scenarios, V16.2.0, June 2019 (Clause 5.5).

5G Automotive Association (5GAA) has also specified Tele-operated Driving, Tele-operated Driving Support, and Tele-operated Driving for Automated Parking use cases and corresponding service level requirements in 5GAA T-190028, 5G Automotive Association; Working Group Use Cases and Technical Requirements; 5G Use Cases and Requirements - Wave 2.1; V1.0 (2019/01/30). In an on-going cross-working group work item, 5GAA is studying the communication solution and the operational architecture for the tele-operated driving services.

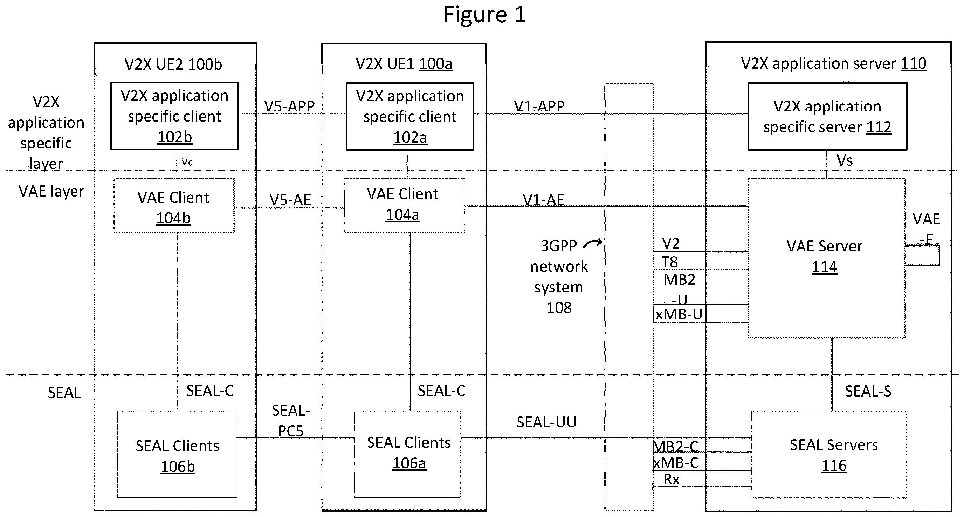

**3GPP** TS 23.286, 3GPP TS 23.286, Application layer support for V2X services; Functional architecture and information flows, V16.1.0, 06-2019 defines V2X application layer model for V2X communications over PC5 and Uu. The model is illustrated in Figure 1. Referring to Figure 1, the V2X application enabler (VAE) layer provide support information to the V2X application.

The V2X user equipment 1 (V2X UE1 100a) communicates with V2X application server 110 over V1 reference point. The V2X UE1 100a and V2X user equipment 2 (V2X UE2 100b) communicate over V5 reference point. V2X UE1 100a can also act as a UE-to-network relay, to enable V2X UE2 100b to access the V2X application server 110 over V1 reference point.

The V2X application layer functional entities for the V2X UE 100a, 100b and the V2X application server 110 are grouped into the V2X application specific layer and the VAE layer. The VAE layer offers the VAE capabilities to the V2X application specific layer. The V2X application layer functional model utilizes the service enabler architecture layer for verticals (SEAL) services as specified in 3GPP TS 23.434, Service Enabler Architecture Layer for Verticals; Functional architecture and information flows, V16.1.0, 06-2019.

The VAE server 114 is located in the VAE layer. The SEAL services utilized by VAE layer are location management, group management, configuration management, identity management, key management and network resource management. The V2X application specific layer consists of the V2X application specific functionalities.

It is noted that the 3GPP TS describes that functionalities of the V2X application specific layer are out of scope of the TS.

The V2X application server 112 includes the VAE server 114, the SEAL servers and the V2X application specific server 112. The VAE server 114 provides the V2X application layer support functions to the V2X application specific server 112 over Vs reference point.

The V2X UEs 100a, 100b include the VAE client 104a, 104b, the SEAL clients 106a, 106b and the V2X application specific client 102a, 102b. The VAE client 104a, 104b provides the V2X application layer support functions to the V2X application specific client 102a, 102b over Vc reference point.

It is noted that in some deployments, the client 106a, 106b and server 116 entities of SEAL can be part of VAE client 104a, 104b and VAE server 114 respectively.

The VAE client 104a, 104b acts as a VAL client for its interaction with the SEAL clients 106a, 106b as specified in 3GPP TS 23.434, Service Enabler Architecture Layer for Verticals; Functional architecture and information flows, V16.1.0, 06-2019. The VAE server 114 acts as a VAL server for its interaction with the SEAL servers 116 as specified in 3GPP TS 23.434, Service Enabler Architecture Layer for Verticals; Functional architecture and information flows, V16.1.0, 06-2019.

In the VAE layer, the VAE client 104a, 104b communicates with the VAE server 114 over V1-AE reference point. In the V2X application specific layer, the V2X application specific client 102a, 102b communicates with V2X application specific server over V1-APP reference point.

It is noted that the 3GPP TS describes that V1-APP reference point is out of scope of the TS.

In the VAE layer, the VAE client 104b of V2X UE2 100b communicates with VAE client 104a of V2X UE1 100a over V5-AE reference point. In the V2X application specific layer, the V2X application specific client 102b of V2X UE2 100b communicates with VAE client 104a of V2X UE1 100a over V5-APP reference point.

It is noted that the 3GPP TS describes that the V5-APP reference point is out of scope of the TS.

The following SEAL services for V2X applications are supported:
- Location management as specified in 3GPP TS 23.434, Service Enabler Architecture Layer for Verticals; Functional architecture and information flows, V16.1.0, 06-2019;
- Group management as specified in 3GPP TS 23.434, Service Enabler Architecture Layer for Verticals; Functional architecture and information flows, V16.1.0, 06-2019;
- Configuration management as specified in 3GPP TS 23.434, Service Enabler Architecture Layer for Verticals; Functional architecture and information flows, V16.1.0, 06-2019;
- Identity management as specified in 3GPP TS 23.434, Service Enabler Architecture Layer for Verticals; Functional architecture and information flows, V16.1.0, 06-2019;
- Key management as specified in 3GPP TS 23.434, Service Enabler Architecture Layer for Verticals; Functional architecture and information flows, V16.1.0, 06-2019; and
- Network resource management as specified in 3GPP TS 23.434, Service Enabler Architecture Layer for Verticals; Functional architecture and information flows, V16.1.0, 06-2019.

**The** VAE client 104a, 104b interacts with SEAL clients 106a, 106b over the SEAL-C reference point specified for each SEAL service. The VAE server 114 interacts with SEAL servers 116 over the SEAL-S reference point specified for each SEAL service. The interaction between the SEAL clients 106a, 106b is supported by SEAL-PC5 reference point specified for each SEAL service. The interaction between a SEAL client 106a, 106b and the corresponding SEAL server 116 is supported by SEAL-UU reference point specified for each SEAL service.

It is noted that the SEAL-C, SEAL-S, SEAL-PC5, SEAL-UU reference points for each SEAL service is specified in 3GPP TS 23.434, Service Enabler Architecture Layer for Verticals; Functional architecture and information flows, V16.1.0, 06-2019.

To support distributed VAE server deployments, the VAE server 114 interacts with another VAE server over VAE-E reference point.

V2X UE1 100a can also act as a UE-to-network relay:
- To enable VAE client 104b on V2X UE2 100b to access
   VAE server 114 over V1-AE reference point; and
- To enable V2X application specific client 102b on V2X UE2
   100b to access V2X application specific server 112 over V1-APP reference point.

A V1-AE message can be sent over unicast, transparent multicast via xMB, transparent multicast via MB2. The non-transparent multicast via xMB is triggered by a V1-AE message. Multicast distribution can be supported by both transparent and non-transparent multicast modes.

The VAE server 114 interacts with the 3GPP network system 108 over V2, MB2, xMB, Rx and T8 reference points. The EPS and 5GS, 3GPP TR 23.764, Study on enhancements to application layer support for V2X services, V0.2.0, July 2019, are considered as the 3GPP network system. Reference is made to "3rd Generation Partnership Project; Technical Specification Group Services and System Aspects; Study on enhancements to application layer support for V2X services; (Release 17)", 3GPP DRAFT; 23764-040, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, 27 January 2020 (2020-01-27), XP051867000.

### SUMMARY

According to various embodiments, a method performed by a first server communicatively connected to a network for supporting tele-operated driving, ToD, of a vehicle is provided. The method includes receiving a request from a client device for a ToO support. The request includes a trigger and information for supporting the ToD event. The method can further include, responsive to the request, signalling to the client device a response to the trigger for providing support for the ToO event.

According to some embodiments, a method performed by a first server further includes processing the request to identify a second server for providing support for the ToO event, wherein the processing is based on parameters of the network for providing ToO support.

According to some embodiments, a method performed by a first server further includes establishing a ToO driving session when the response includes an indication that support for the ToO event is possible.

According to some embodiments, a method performed by a first server further includes predicting whether the ToD event is likely in a future time period based on prediction information. The method further includes signalling the prediction to at least one of the vehicle and control system for ToO driving of the vehicle when the prediction is that the ToD event is likely in the future time period.

According to some embodiments, a method performed by a first server further includes receiving the prediction information from one or more of the vehicle, the second server, a network server, and a third party application server.

According to some embodiments, a method performed by a first server further includes deciding whether adaption of a behavior of the vehicle is desired in preparation for the ToO event based on the prediction that the ToD event is likely in the future time period and adaption information.

According to some embodiments, a method performed by a first server further includes selecting a remote driver for the ToO event when the decision is that adaption of a behavior of the vehicle is desired based on at least information of a ToO service provider.

According to some embodiments, a method performed by a first server further includes selecting a QoS for the network for the ToO event based on one or more of information of a ToO service provider and a QoS information of the network.

Corresponding embodiments of inventive concepts for a first server, computer products, and computer programs are also provided.

According to other embodiments, a method performed by a first client device communicatively connected to a network for supporting tele-operated driving, ToD, of a vehicle is provided. The method includes signalling a request to a first server for a ToO support. The request includes a trigger and information for supporting the ToD event. The method further includes, responsive to the request, receiving from the first server a response to the trigger for providing support for the ToO event.

According to some embodiments, a method performed by a first client device further includes receiving a request from a second client device for support for the ToO event. The method further includes processing the request from the second client device to identify a server for providing support for the ToO event, wherein the processing is based on at least one of a current geographical location of the vehicle and a trajectory for the vehicle.

According to some embodiments, a method performed by a first client device further includes processing the response to identify the second client device that initiated the request. The method further includes signalling the response to the second client device.

According to some embodiments, a method performed by a first client device further includes establishing a ToO driving session when the response comprises an indication that support for the ToO event is possible.

According to some embodiments, a method performed by a first client device further includes receiving a prediction from the server that the ToD event is likely in a future time period based on prediction information.

According to some embodiments, a method performed by a first client device further includes predicting whether the ToD event is likely in a future time period based on prediction information. He method further includes signalling the prediction to at least one of the vehicle and a control system for ToO driving of the vehicle when the prediction is that the ToD event is likely in the future time period.

According to some embodiments, a method performed by a first client device further includes receiving the prediction information from one or more of the vehicle, the second server, a network server, and a third party application server.

According to some embodiments, a method performed by a first client device further includes deciding whether adaption of a behavior of the vehicle is desired in preparation for the ToO event based on the prediction that the ToD event is likely in the future time period and adaption information.

According to some embodiments, a method performed by a first client device further includes selecting at least one vehicle setting before starting an operation for the ToO event based on one or more of an indication including information from a sensor of the vehicle, an indication including map information from the vehicle, an indication including traffic information, and an indication including information from a ToO operator.

According to some embodiments, a method performed by a first client device further includes selecting a QoS for the network for the ToO event based on one or more of information of a ToO service provider and a QoS information of the network.

Corresponding embodiments of inventive concepts for a first client device, computer products, and computer programs are also provided.

In some approaches, triggers, prediction and adaption for ToO support are not provided.

Various embodiments of the present disclosure may provide solutions to these and other potential problems. In various embodiments of the present disclosure, triggering ToO support from the vehicle to a remote driver may be provided. Additionally, prediction and adaptation of an upcoming ToO event may be provided. As a consequence, support and communications to a remote driver may be provided; and application programming interfaces (APIs) that allow V2X service providers to communicate with mobile network operators for establishing ToO support also may be provided.

### BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:
Figure 1 is a block diagram illustrating a V2X application model from 3GPP TS 23.286, Application layer support for V2X services; Functional architecture and information flows, V16.1.0, 06-2019;
Figure 2 is a schematic diagram illustrating operations for triggering ToO support and communicating ToO requirements with a VAE server according to some embodiments of inventive concepts;
Figure 3 is a timeline illustrating prediction, adaption, and trigger for ToO events according to some embodiments of inventive concepts;
Figure 4 is a block diagram illustrating an example of a ToO prediction model;
Figure 5 is an overall flow chart illustrating ToO event prediction, adaption and trigger for ToO support according to some embodiments of inventive concepts;
Figure 6 is a flow chart illustrating operations for adaption for ToO events according to some embodiments of inventive concepts;
Figure 7 is a block diagram illustrating a first server according to some embodiments of inventive concepts;
Figure 8 is a block diagram illustrating a first client device according to some embodiments of inventive concepts;
Figures 9a-9b are flow charts illustrating examples of operations of a first server according to some embodiments of inventive concepts;
Figures 10a-10b are flow charts illustrating examples of operations of a first client device according to some embodiments of inventive concepts;
Figure 11 is a block diagram of a wireless network in accordance with some embodiments;
Figure 12 is a block diagram of a user equipment in accordance with some embodiments
Figure 13 is a block diagram of a virtualization environment in accordance with some embodiments;
Figure 14 is a block diagram of a telecommunication network connected via an intermediate network to a host computer in accordance with some embodiments;
Figure 15 is a block diagram of a host computer communicating via a base station with a user equipment over a partially wireless connection in accordance with some embodiments;
Figure 16 is a block diagram of methods implemented in a communication system including a host computer, a base station and a user equipment in accordance with some embodiments;
Figure 17 is a block diagram of methods implemented in a communication system including a host computer, a base station and a user equipment in accordance with some embodiments;
Figure 18 is a block diagram of methods implemented in a communication system including a host computer, a base station and a user equipment in accordance with some embodiments; and
Figure 19 is a block diagram of methods implemented in a communication system including a host computer, a base station and a user equipment in accordance with some embodiments.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

The following explanation of potential problems is a present realization as part of the present disclosure and is not to be construed as previously known by others. The current requirements and procedures in 3GPP TS 23.286, Application layer support for V2X services; Functional architecture and information flows, V16.1.0, 06-2019, 3GPP TS 23.434, Service Enabler Architecture Layer for Verticals; Functional architecture and information flows, V16.1.0, 06-2019, and 3GPP TR 23.795, Study on application layer support for V2X services, V16.0.0, Sept. 2018, have mainly addressed geo-based Intelligent Transport Systems/V2X (ITS/V2X) message distribution. In one approach, establishing sessions for services as ToD has been described in 3GPP TR 23.764, Study on enhancements to application layer support for V2X services, V0.2.0, July 2019. This approach does not describe triggers for ToO support, e.g. when ToD is needed. Triggers should happen before a ToD session is established. Also, the device and server APIs for initiating ToD support are not described in the TS.

Aditionally, current work in 5GAA, 5GAA XWG5-190009 Work Item Description, Requirements and architecture for Tele-operated Driving, has focused on use-cases and requirements. The planned description of communication solutions and operational architecture for ToD services has not started yet in 5GAA.

Various embodiments of inventive concepts describe ToD and more specifically triggers and APIs for initiating a ToD support from a vehicle to a remote driver as well as communication of ToD requirements between the vehicle and remote driver.

Potential advantages provided by various embodiments of the present disclosure may include triggering ToD support from the vehicle to a remote driver. Additional potential advantages may include prediction and adaptation of an upcoming ToD event and providing support and communications to a remote driver. Additional potential advantages may include APIs that allow V2X service providers to communicate with mobile network operators for establishing ToD support.

There are several example use-cases where ToD support may be needed:
- The driver of vehicle or the automated driving system relies on a remote driver to take control of the vehicle for a period to the destination.
- The driver of vehicle or the automated driving system that enters a construction zone or the scene of an accident sends a tele-operated driving request to the remote driver to take control of the vehicle for a limited time and area.
- Automated parking: The driver of vehicle or the automated driving system enters a public or private parking area and requests remote driving support for automated parking.
- Infrastructure based tele-operated driving: This is a way of implementing ToD using the data and inputs from infrastructure sensors and cameras to the remote driver, instead of only from the on-board sensors and cameras of the vehicle.

Consequently, there may be two levels of control:
- A remote driver sends assisting information as trajectory information (e.g. way points) to the vehicle or automated driving system which is still in charge of the operation control of the vehicle, e.g. angle of the steering wheel, braking, and accelerating.
- A remote driver takes full control of driving the car and is able to remotely operate the car e.g. control acceleration, angle of steering wheels.

In ToD, a remote entity either human or machine may provide relevant information to the vehicle that is remotely driven. For instance, in some implementations a remote driving center provides trajectories to the vehicle in order to drive in an autonomous manner to the available/predefined parking spot. In other implementations, a remote driving center (human or machine) undertakes to drive the vehicle (e.g., sending steering/command instruction), supported by real time video streaming that is sent from the remotely driven vehicle and sensor information. Overall, a ToD session involves the transmission from the vehicle to the driving center of sensor data (interpreted objects), progressive high definition video/camera (up to four cameras are needed, one for each corner of the vehicle) in case of human remote driver. The information that is sent from the remote center to the vehicle is in the form of driving trajectories (e.g., in the form of waypoints with associated timestamps), and steering commands such as torque values for brake/acceleration and steering. Depending on the implementation, ToD might require latency down to 20ms (e.g., to ensure that commands and vehicle status are synched) and data rate up to 64 Mbps considering the transmission of video at HD quality from multiple qualities. Considering that when such requirements are not met the ToD cannot happen (e.g., the vehicle is stopped from being driven remotely and the vehicle has to switch to full autonomous driving or to switch to human driver in the vehicle), it is then important to know when/where ToD can be supported.

Various embodiments of inventive concepts describe three functionalities which can happen before a ToD support from a remote driver to a vehicle has been initiated: namely, ToD event prediction, adaptation and trigger.

**The** V2X UE or V2X application server might predict that ToD is needed based on ToD service, vehicle, map, traffic, and QoS information. The ToD event prediction can happen either at the V2X application-specific client or V2X application-specific server. It may be up to the V2X UE to trigger a ToD support, which can be based on ToD event prediction at the client or server. A V2X UE includes, without limitation, a vehicle such as a car or a truck.

Furthermore, advance adaptation may be considered after predicting an upcoming ToD situation. The adaptation may consider vehicle adaptation, remote driver selection, and setup of QoS parameters.

APIs and procedures for triggering tele-operated support by a vehicle acting as V2X UE are described below. Triggers can be for an event of starting/stopping a ToD session or for a specific event that requires support from a remote driver (acts as a V2X application-specific server). Information to be provided by the V2X UE to the server such as destination or schedule is also described below. Additionally, device and server APIs between the application-specific client (respectively server) and the VAE client (respectively server) to initiate a ToD support request are described below. It is noted that ToD event trigger may happen independent of whether prediction or adaptation operations happened before.

Procedures for triggering ToD support; APIs for triggering and terminating ToD support; an overall concept which considers prediction, adaptation and trigger are described below, including exemplary prediction and adaptation algorithms.

Exemplary procedures for triggering ToD support will now be described.

Pre-conditions include:
1. The V2X UE has subscribed to a tele-operated driving service.
2. The V2X UE has already discovered one or more VAE servers that provide a tele-operated driving service.

It is noted that procedures of inventive concepts can be applied for other services that require server support for a limited time.

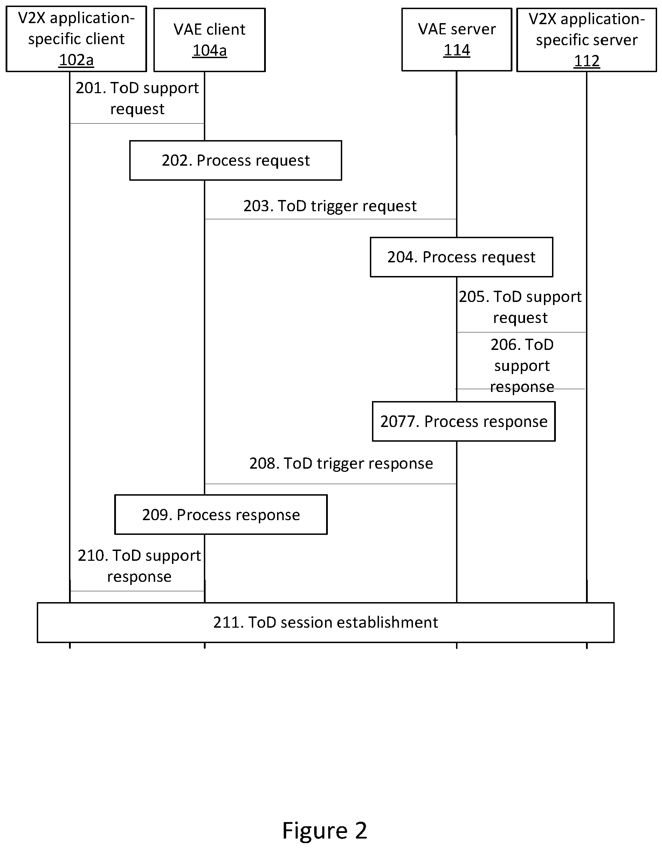

Figure 2 is a schematic diagram illustrating operations for triggering ToD support and communicating ToD requirements with a VAE server according to some embodiments of inventive concepts.

Referring to Figures 1 and 2, exemplary operations performed by client devices and servers will now be described. V2X UE 100a includes V2X application specific client 102a and VAE client 104a. V2X application server 110 includes VAE server 114 and V2X application specific server 112. At operation 201, V2X application-specific client 102a determined a current or upcoming situation which requires ToD support and triggers VAE client 104a to initiate a ToD request along with ToD requirements (e.g. start and end points in the form of geographical and/or time points, location information such as trajectory of the vehicle, capability/situation of the vehicle, e.g. if it can perform automated driving based on the trajectory from the remote driver, or it will rely on the remote operational control by the remote driver).

At operation 202, VAE client 104a processes the ToD support request. VAE client 104a can determine the VAE server based, e.g., on current geographical location of the vehicle or vehicle trajectory from the list of available VAE servers (e.g., VAE server 114) that provide ToD service and their serving geographical areas.

At operation 203, VAE client 104a sends a ToD trigger request with the ToD requirements (e.g., start and end points) to VAE server 114.

At operation 204, VAE server 114 processes the ToD trigger response and determines the V2X application-specific server (e.g., V2X application specific server 112) for ToD support (acts as remote driver). VAE server 114 can decide based on network and QoS related parameters of the network the available ToD support, e.g., which kind of ToD service (trajectory or operational control) it can provide depending on the network conditions. It is noted that operation 204, may require interaction with the network (e.g., network 108) to retrieve QoS information, if not available at VAE server 114. It is further noted that, according to available or retrieved network and QoS related information for ToD support, as well as considering whether there is an available V2X application-specific server for ToD support, the VAE server may also reject the ToD request.

At operation 205, VAE server 114 provides a ToD support request to V2X application-specific server 112. It is noted that the ToD service request can be provided to the V2X application-specific server 112 (bypassing VAE server 114). In this case the V2X application specific server 112 can decide on the type of ToO service.

At operation 206, V2X application-specific server 112 provides a ToD support response indicating if ToD support is possible.

At operation 207, VAE server 114 processes the ToD support response from the V2X application-specific server 112 (e.g., stores V2X application-specific server 112 which serves V2X UE 100a).

At operation 208, VAE server 114 provides a ToD trigger response to VAE client 104a. It is noted that VAE server 114 can provide additional information with the ToD trigger response such as, e.g., network information and QoS related information. The ToD application specific client 102a may adapt its behaviour according to the QoS notification information.

At operation 209, VAE client 104a can process the response, e.g. determine V2X application-specific client 102a who initiated the ToD support request.

At operation 210, VAE client 104a provides a ToD support response to the V2X application-specific client 102a.

At operation 211, a tele-operated driving session can be established as described in subclause 7.1 in 3GPP TR 23.764, Study on enhancements to application layer support for V2X services, V0.2.0, July 2019, in case of success response.

APIs for triggering ToD support will now be described.

Standard APIs allow V2X service providers to communicate with mobile network operators and establish a ToD support over 3GPP network. Specifically, V2X application specific servers and clients are owned by V2X service providers e.g. OEMs, road authorities. VAE servers and clients are provided by mobile network operators.

A first exemplary API can be named V2X ToD_Support_Client. The consumer can be V2X application specific client (e.g., V2X application specific client 102a). Operations of the first exemplary API include:
- V2X Application_Specific Client ToD_Support (Request/Response) ToD support request from V2X application-specific client to VAE client. Includes requirements as start and stop times or destination or schedule. ToD support response from VAE client to V2X application-specific client. Includes success or failure indicating if ToD support is possible.

A second exemplary API can be named V2X_ToD_Support_Server. The consumer can be V2X application specific server (e.g., V2X application specific server 112). Operations of the second exemplary API include:
- V2X Application_Specific Server ToD_Support (Request/Response)
ToD support request from VAE server to V2X application-specific server. Includes requirements as start and stop times or destination or schedule. ToD support response from V2X application-specific server to the VAE server. Includes success or failure indicating if ToD support is possible.

A third exemplary API can be named Terminate V2X ToD_Support_Client. The consumer can be V2X application specific client (e.g., V2X application specific client 102a). Operations of the third exemplary API include:
- V2X Application_Specific Client Terminate ToD_Support (Request/Response)
   Terminate ToD support request from V2X application-specific client to VAE client. Includes requirements as when ToD support shall be terminated.
   Terminate ToD support response from VAE client to V2X application-specific client. Includes success or failure indicating if Terminate ToD support is possible.

A fourth exemplary API can be named Terminate V2X ToD_Support Server. The consumer can be V2X application specific server (e.g., V2X application specific server 112). Operations of the fourth exemplary API include:
- V2X Application_Specific Server Terminate ToD_Support (Request/Response)
   Terminate ToD support request from VAE server to V2X application-specific server. Includes requirements as when ToO support shall be terminated.
   Terminate ToD support response from V2X application-specific server to the VAE server. Includes success or failure indicating if Terminate ToD support is possible.

**ToD** prediction, adaption and trigger will now be described.

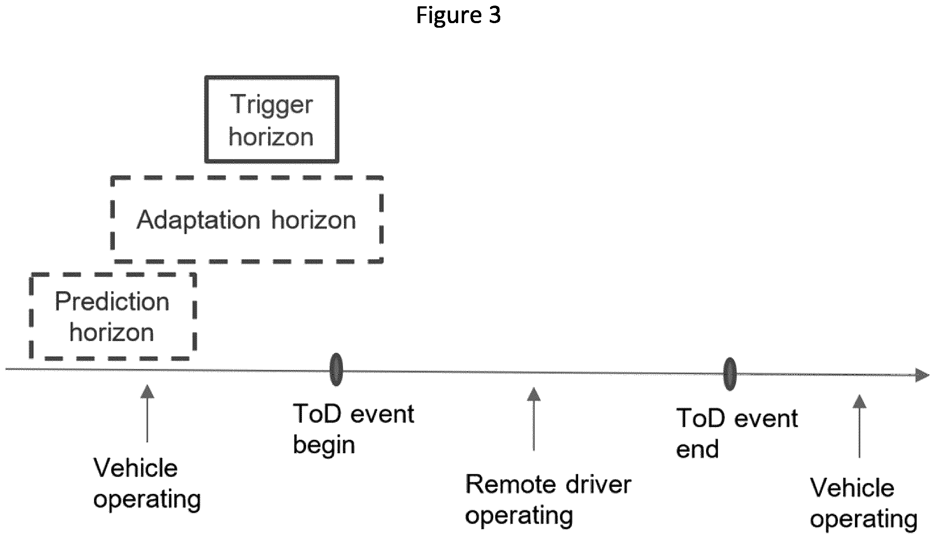

Figure 3 is a timeline illustrating prediction, adaption, and trigger for ToD events according to some embodiments of inventive concepts. The ToD may have defined start and end times where a remote driver should take control of the car:
- Prediction: The vehicle predicts a forthcoming situation that requires ToD support before reaching the area. The vehicle can predict a single upcoming ToD event or multiple upcoming ToD events e.g. stop/go or an upcoming left turn. It is noted that ToD event prediction can be performed at the server and indicated to the vehicle.
- Adaptation: The vehicle can adapt based on the prediction of an upcoming event by:
   ∘ requesting from the network a session able to support the required service requirements, and also providing the network with information about the Alternative Service Requirements.
   ∘ Adapting the vehicle itself: as configurations e.g. with respect to speed or sensors as cameras it needs to enable.
   ∘ Finding a remote driver in advance for instance by estimating the number of vehicles that would require ToD assistance and scaling server load.
- Trigger: The vehicle can trigger a ToO event when required. The trigger horizon is when a vehicle recognizes that a ToO event is needed and communicates with the remote driver to take control of the car. The trigger horizon could be considered as the time interval from when the ToD event is predicted to be needed (e.g., the time when the output of prediction indicates that ToD event is required) to when ToD is expected to be established and functional. It is noted that prediction and adaptation are optimizations or improvements so trigger can happen when ToD is needed without prediction beforehand.

An exemplary prediction algorithm will now be described.

A ToD prediction algorithm can predict if a ToD event is likely to happen in the next seconds or minutes. ToO prediction can be performed at the V2X UE or V2X application server. An example scenario is when the concerned vehicle is approaching to a scene of an accident, the V2X application server (remote driver) already knew the accident event and already provided the ToD support to several vehicles that arrived at the accident location earlier than the concerned vehicle. In this case, the V2X application specific server (remote driver) can offer the ToD service to the concerned vehicle in advance. In this case, the ToD event is predicted by the V2X application specific server and signalled to the V2X UE. The V2X UE triggers the V2X application server to start a ToD support.

Another exemplary situation may be that the remote driver is a policeman who is standing outside the vehicle but on site close to the concerned vehicle. In this case, the policeman can steer the vehicle via a mobile ToD control device to get through the accident site.

Inputs (also referred to herein as prediction information) to the prediction algorithm can include, without limitation:
- Vehicle information such as a driver request to operate the vehicle in ToD mode, or vehicle sensor information, e.g., constant speed when driving at the highway and vehicle can be operated in ToD mode.
- Map information e.g. trajectory information, such as left or right turn ahead.
- Traffic information, such as accident or information about road traffic situation
- Current or predicted network quality of service (QoS) information, such as network QoS required to operate the vehicle in ToD mode is satisfied (QoS is supported, via QoS class or network slice).
- ToD operator's information may be another input, as ToD service provider may know where vehicles need such ToD service based on previous vehicles it served on the same path

Outputs of the prediction algorithm can include, without limitation: an indicator if ToD support is needed. The output can be a binary classifier if ToD is needed or not.

Configuration parameters (also referred to herein as parameters) of the prediction algorithm can include, without limitation, a prediction horizon (also referred to herein as a defined prediction time period) (e.g., 10 sec or a ToD duration (start and end points)).

The model can be trained and tested from labelled data and for different configurations

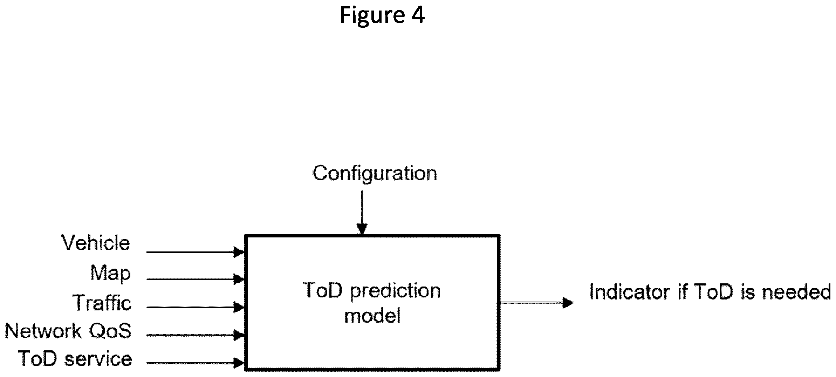

Figure 4 is a block diagram illustrating an example of a ToD prediction model. Referring to Figure 4, the ToD prediction model can be performed at the client or server, and specifically the V2X application-specific client (e.g., V2X application-specific client 102a) or V2X application-specific server (e.g., V2X application-specific server 112).

Depending on where the prediction is happening, some exchange of parameters may be required. For example:
- Vehicle information is typically available at the V2X UE.
   ∘ Such sensor information can be exchanged with the V2X application server.
- Map information can be available at the V2X UE or V2X application server.
   ∘ Exchange of such information is known.
- Traffic information is typically available at network or 3rd party application server.
   ∘ Exchange of such information as accident to the server or UE is known.
- QoS information is typically available at the network.
   ∘ Mechanisms to provide QoS information to the server or UE are available.
   • ToD service information is typically available at the server.
      ∘ Usage of such information to predict ToD events is new. Such information is available at the server. If prediction algorithm is performed at the V2X UE and this information is need, it needs be communicated to the V2X UE.

It is noted that the V2X UE might also build its own history of locations and periods where it requested ToD support in the past. It is also noted that if ToD prediction is performed at the V2X application-specific server, the V2X application-specific server provides the V2X application-specific client with the ToD prediction. The reception of the ToD prediction from the V2X application-specific server involves that the V2X application-specific client triggers the adaptation algorithm in a similar way as if the ToD prediction was performed at the V2X application-specific client.

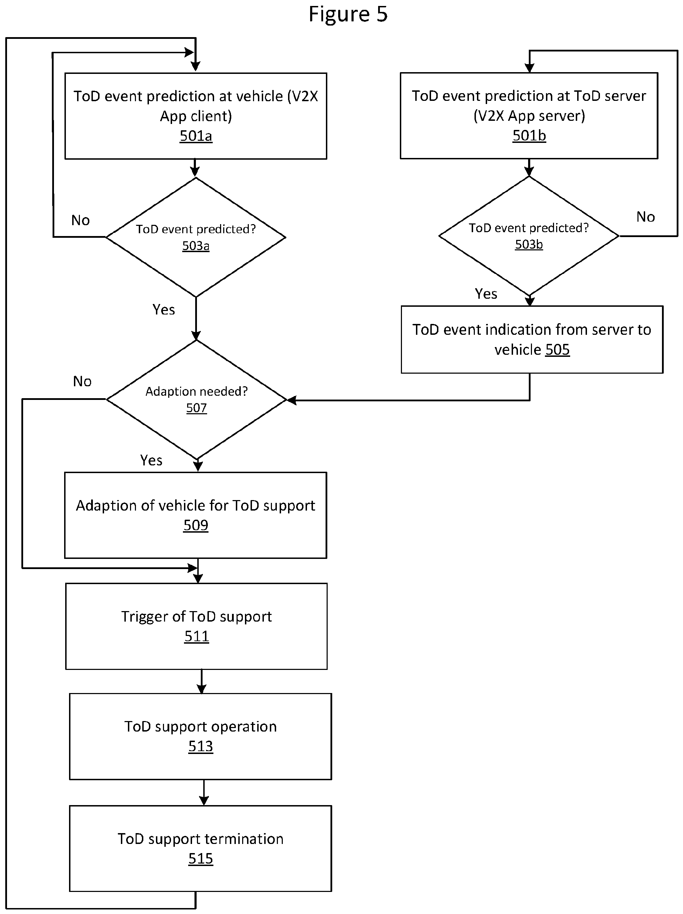

Figure 5 is an overall flow chart illustrating ToD event prediction, adaption and trigger for ToD support according to some embodiments of inventive concepts and as described herein with relation to Figures 2, 3, 4 and 6.

An exemplary adaption algorithm will now be described.

An adaptation algorithm can be executed with the aim to adapt vehicle's behavior and status in order to be prepared for the upcoming ToD event. The adaptation can be performed at the V2X UE (E.G., V2X UE 100A) or V2X application server (e.g., V2X application server 110). Adaptation can cover several aspects.

One aspect is vehicle behavior, e.g., a vehicle needs to reduce speed or change lane before being operated during the ToD event. Another aspect is vehicle settings, e.g., a vehicle needs to enable/disable some sensors (e.g., enable cameras for sending video to remote driver) or some applications before starting the ToD operations. Another aspect is finding the most adequate remote driver for the upcoming ToD event. A further aspect is selecting the most adequate QoS to run the ToD session and, if needed, establish a session with the network with QoS set according to the service requirements of the ToD event and also providing the network with information about the Alternative Service Requirements of the ToD event. According to this, it should be highlighted that, given that the adaptation may focus on several aspects, the adaptation could be considered as a composition of different adaptation algorithms, each focusing on a specific adaptation feature.

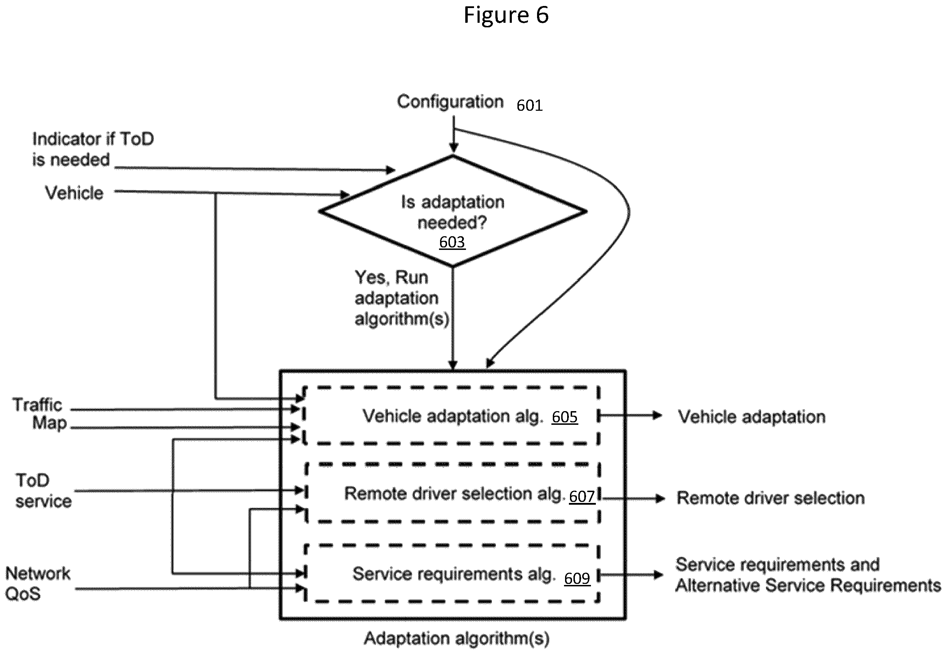

Figure 6 is a flow chart illustrating operations for adaption for ToD events according to some embodiments of inventive concepts. Referring to Figure 6, operations for performing adaption are described as follows:

At operation 603, check if adaptation is needed. The following configuration information 601 can be used for this operation:
- Indicator if ToD is needed, that is the output from the prediction algorithm. In this case, If the indicator indicates that ToD is needed, the adaptation check is enabled otherwise it is not enabled.
- Vehicle information which include information about current vehicle behavior (e.g., speed, lane, trajectory) and vehicle settings (e.g., current active sensors and their priority). This information can be used to understand whether an adaptation is needed with respect to current vehicle status (e.g., there could be cases when adaptation may not be needed as current speed and vehicle setting are already adequate for the predicted ToD).
- Configuration parameters: prediction horizon (e.g., 10 sec), ToD duration (start and end points), ToD configuration (e.g., required or suggested set of sensors and associated priorities). This information could be used to drive the decision whether adaptation is needed, e.g., if the ToD configuration is different with respect to current vehicle configuration.

At operation 605, if the adaptation is needed, the relevant tasks of adaptation are performed (note that if adaptation is not required, the algorithm stops and there are no adaptations required). For this operation, configuration parameters can be considered as information used by the different adaptation algorithms, where for instance configuration parameters might indicate which configuration to be used for the adaptation. The adaptation can be either static (e.g., pre-configured adaptation for a certain ToO event) or dynamic depending on the different inputs and predicted ToD event. The two cases may then vary in terms of required inputs. The following algorithms or tasks of adaptation are discussed, although only some of these tasks could happen or also more tasks could be considered depending on the specific ToD event and implementation:
- Vehicle adaptation algorithm (client-side adaptation): this process targets to find the most suitable adaptation of vehicle settings, e.g., a vehicle needs to enable/disable some sensors (e.g., enable cameras for sending video to remote driver) or some applications before starting the ToD operations. The output of this process is the vehicle adaptation (e.g., adapted vehicle behavior and settings). Several information can be used for this algorithm, including:
   ∘ Vehicle information which include information about current vehicle behavior and vehicle settings.
   ∘ Map information e.g. trajectory information, such as left or right turn ahead. This information can be used for the adaptation for instance to consider which are the conditions to be consider (e.g., which trajectory the vehicle will follow or which speed limits are present in a certain area).
   ∘ Traffic information, such as accident or information about road traffic situation. This information can be used for the adaptation for instance to consider the current state of road utilization.
   ∘ ToD operator's information may be another input, as ToD service provider may know where vehicles need such ToD service based on previous vehicles it served on the same path and such information may be used to drive the adaptation of the vehicle.
- At operation 607, remote driver selection processing (server-side adaptation) can be performed. This tasks targets to find a most adequate remote driver for the upcoming ToD event. The output of this process is the driver who has been selected for the remote operation (V2X application server adaptation). Several information can be used for this algorithm, including:
   ∘ ToD operator's information, as ToD service provider may know where vehicles need such ToD service based on previous vehicles it served on the same path with the information about the selected driver, and such information may be used to drive the selection of the remote driver.
   ∘ Current or predicted network QoS information, such as network QoS required to operate the vehicle in ToD mode is satisfied (QoS is supported, via QoS class or network slice). This information may be used for instance, to select among a possible list of candidate remote drivers the one whose requirements of the associated service are satisfied according to network QoS information.
- At operation 609, service requirements processing (network adaptation) can be performed. This task targets to select a most adequate QoS to be used when setting up or updating the communication session with the network. The output of this task is an adequate QoS for the ToD service, which includes the service requirements as well as the alternative service requirements which are associated for the upcoming ToD. Several information can be used for this algorithm, including:
   ∘ ToD operator's information, as ToD service provider may provide information about QoS for ToD operation or information about QoS used for other similar ToD events.
   ∘ Current or predicted network QoS information, such as network QoS required to operate the vehicle in ToD mode is satisfied (QoS is supported, via QoS class or network slice). This information may be used for instance, to select the service requirements and alternative service requirements for the ToD event which are more likely to be satisfied by the network according to network QoS information.

A trigger mechanism of inventive concepts is described herein. More specifically, exemplary procedures and APIs for triggering ToD support between a V2X UE (e.g., V2X UE 100a) and a V2X application specific server (e.g., V2X application specific server 112) are described above.

In various embodiments of inventive concepts, methods and procedure for triggering ToD support from a vehicle to a remote driver are provided. APIs for communicating ToD support triggers inside a V2X UE and a V2X application server are provided, as well as procedures for triggering a ToD support request. Various embodiments of inventive concepts additionally provide processes for prediction and adaptation of a ToD event. Prediction can happen at either the client or server and can be based on, without limitation, vehicle, map, traffic, QoS, and ToD service information.

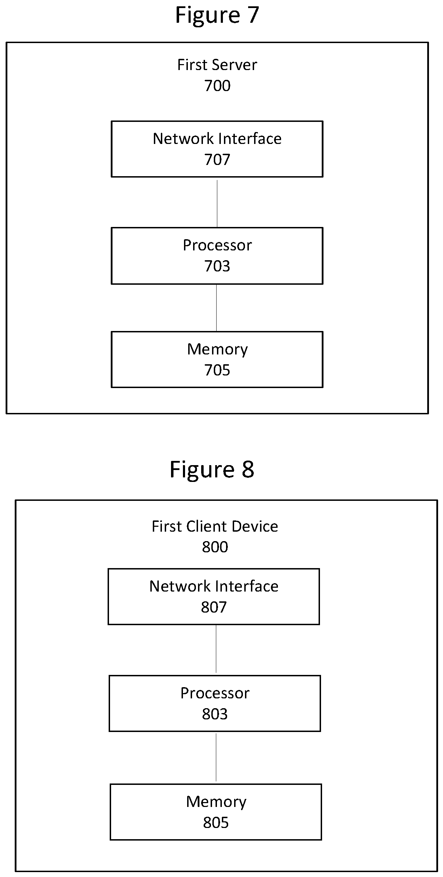

Figure 7 is a block diagram illustrating elements of a first server 700 (also referred to herein as a V2X application server, including V2X application server and VAE server) configured to provide ToD support according to embodiments of inventive concepts. As shown, the first server, including each of the V2X application server and VAE server, may each include network interface circuitry 707 (also referred to as a network interface) configured to provide communications with other servers and devices communicatively connected to the network. The first server, including each of the V2X application server and VAE server, may also each include a processing circuitry 703 (also referred to as a processor) coupled to the network interface circuitry, and memory circuitry 705 (also referred to as memory) coupled to the processing circuitry. The memory circuitry 705 may include computer readable program code that when executed by the processing circuitry 703 causes the processing circuitry to perform operations according to embodiments disclosed herein. According to other embodiments, processing circuitry 703 may be defined to include memory so that a separate memory circuitry is not required.

**As** discussed herein, operations of the first server, including each of the V2X application server and VAE server, may be performed by processing circuitry 703 and/or network interface circuitry 707. For example, processing circuitry 703 may control network interface circuitry 707 to transmit communications through network interface circuitry 707 to one or more other devices and/or servers and/or to receive communications through network interface circuitry from one or more other devices or servers. Moreover, modules may be stored in memory 705, and these modules may provide instructions so that when instructions of a module are executed by processing circuitry 703, processing circuitry 703 performs respective operations (e.g., operations discussed below with respect to Example Embodiments relating to first servers).

Figure 8 is a block diagram illustrating elements of a first client device 800 (also referred to herein as a V2X UE, including V2X application specific client and VAE client) configured to provide ToD operations and communications according to embodiments of inventive concepts. As shown, the first client device, including the V2X application specific client and VAE client, may each include network interface circuitry 807 (also referred to as a network interface) configured to provide communications with other devices and servers communicatively connected to the network. The first client device, including the V2X application specific client and VAE client, may also each include a processing circuitry 803 (also referred to as a processor) coupled to the network interface circuitry, and memory circuitry 805 (also referred to as memory) coupled to the processing circuitry. The memory circuitry 805 may include computer readable program code that when executed by the processing circuitry 803 causes the processing circuitry to perform operations according to embodiments disclosed herein. According to other embodiments, processing circuitry 803 may be defined to include memory so that a separate memory circuitry is not required.

As discussed herein, operations of the first client device, including the V2X application specific client and VAE client, may be performed by processing circuitry 803 and/or network interface circuitry 807. For example, processing circuitry 803 may control network interface circuitry 807 to transmit communications through network interface circuitry 807 to one or more other devices and/or servers and/or to receive communications through network interface circuitry from one or more other devices or servers. Moreover, modules may be stored in memory 805, and these modules may provide instructions so that when instructions of a module are executed by processing circuitry 803, processing circuitry 803 performs respective operations (e.g., operations discussed below with respect to Example Embodiments relating to first client devices).

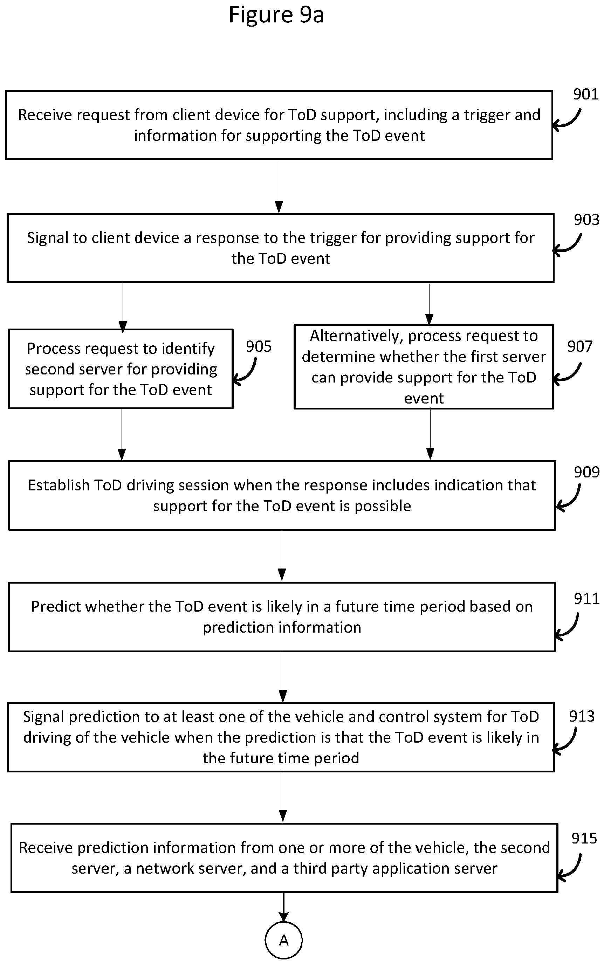

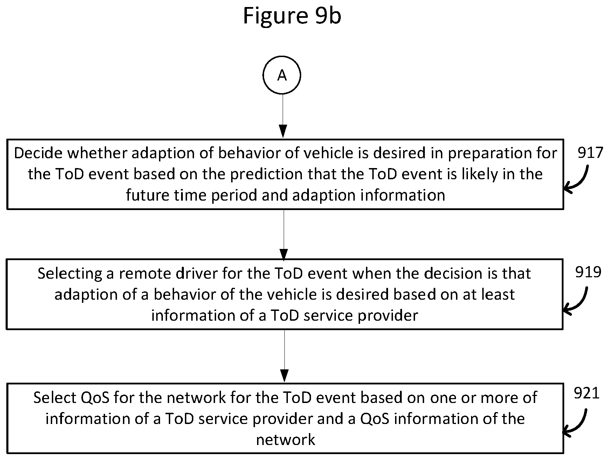

Operations of the first server 110 (implemented using the structure of the block diagram of Figure 7) will now be discussed with reference to the flow charts of Figures 9a-9b according to some embodiments of inventive concepts. For example, modules may be stored in memory 705 of Figure 7, and these modules may provide instructions so that when the instructions of a module are executed by respective communication device processing circuitry 703, processing circuitry 703 performs respective operations of the flow chart. Although Figures 9a-9b are described below in regard to first server 110, the operations in Figures 9a-9b can be performed by any suitable V2X application specific server and/or any suitable VAE server, for example, V2X application specific server 112 and VAE server 114.

In Figure 9a-9b, at block 901, processing circuitry 703 receives a request from a client device for a ToD support. The request includes a trigger and information for supporting the ToD event.

At block 903, responsive to the request, processing circuitry703 signals to the client device a response to the trigger for providing support for the ToD event.

In some embodiments, the trigger includes at least one of an event of starting or stopping a ToO driving session and a specified event for receiving support from a remote driver.

In some embodiments, the information for supporting a ToD event includes at least one of the following: a geographical start point and a geographical end point for the ToD event; a time start point and a time end point for the ToO event; a location trajectory for the vehicle for the ToD event; a capability of the vehicle for the ToD event; and a status of the vehicle for the ToD event.

In some embodiments, the information for supporting a ToD event includes at least one of the following: a geographical start point and a geographical end point for the ToD event; a time start point and a time end point for the ToO event; a location trajectory for the vehicle for the ToD event; a capability of the vehicle for the ToD event; and a status of the vehicle for the ToD event.

In some embodiments operations of the first server further include the operations of block 905. At block 905, processing circuitry 703 processes the request to identify a second server for providing support for the ToO event. The processing is based on parameters of the network for providing ToD support.

In some embodiments operations of the first server further include the operations of block 907. At block 907, processing circuitry 703 processes the request to determine whether the first server can provide support for the ToD event, wherein the processing is based on parameters of the network for providing ToD support.

In some embodiments, the parameters include at least one of: quality of service, QoS, related information for the ToD support and whether support for the ToD event is available.

In some embodiments, the response further includes the parameters.

In some embodiments operations of the first server further include the operations of block 909. At block 909, processing circuitry 703 establishes a ToD driving session when the response includes an indication that support for the ToD event is possible.

In some embodiments operations of the first server further include the operations of blocks 911 and 913. At block 911, processing circuitry 703 predicts whether the ToD event is likely in a future time period based on prediction information. At block 913, processing circuitry 703 signals the prediction to at least one of the vehicle and control system for ToO driving of the vehicle when the prediction is that the ToD event is likely in the future time period.

In some embodiments, the future time period comprises at least one of a defined prediction time period and a duration for the ToD event.

In some embodiments, the prediction information includes at least one of: an indication comprising a driver of the vehicle requests to operate the vehicle in a ToD mode; an indication comprising information from a sensor of the vehicle; an indication comprising map information from the vehicle; an indication comprising traffic information; and an indication comprising information from a ToD operator.

In some embodiments, the prediction includes a binary indicator that ToD is needed or that ToD is not needed.

In some embodiments operations of the first server further include the operations of block 915. At block 915, processing circuitry 703 receives the prediction information from one or more of the vehicle, the second server, a network server, and a third party application server.

In some embodiments operations of the first server further include the operations of block 917. At block 917, processing circuitry 703 decides whether adaption of a behavior of the vehicle is desired in preparation for the ToD event based on the prediction that the ToD event is likely in the future time period and adaption information.

In some embodiments, the future time period includes at least one of the defined prediction time period, a duration for the ToD event, and a ToD configuration.

In some embodiments, the adaption information includes at least one of: an indication comprising information about current behavior of the vehicle; and an indication of one or more settings of the vehicle.

In some embodiments operations of the first server further include the operations of block 919. At block 919, processing circuitry 703 selects a remote driver for the ToD event when the decision is that adaption of a behavior of the vehicle is desired based on at least information of a ToD service provider.

In some embodiments operations of the first server further include the operations of block 921. At block 921, processing circuitry 703 selects a QoS for the network for the ToD event based on one or more of information of a ToD service provider and a QoS information of the network.

Various operations from the flow chart of Figures 9a-9b may be optional with respect to some embodiments of first servers and related methods. Regarding methods of example embodiment 1 (set forth below), for example, operations of blocks 905-921 of Figures 9a-9b may be optional.

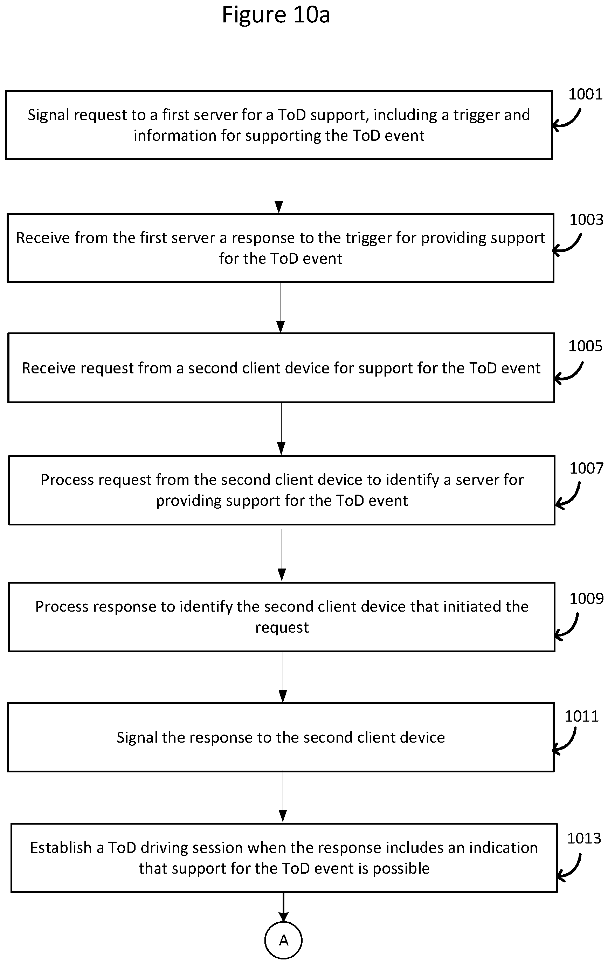

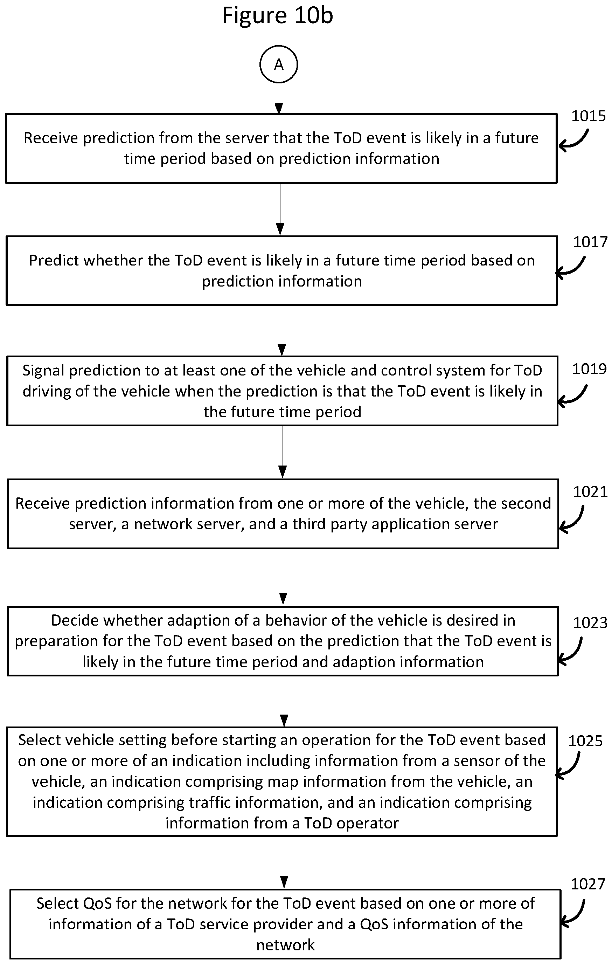

Operations of the first client device 100a (implemented using the structure of the block diagram of Figure 8) will now be discussed with reference to the flow charts of Figures 10a-10b according to some embodiments of inventive concepts. For example, modules may be stored in memory 805 of Figure 8, and these modules may provide instructions so that when the instructions of a module are executed by respective communication device processing circuitry 803, processing circuitry 803 performs respective operations of the flow chart. Although Figures 10a-10b are described below in regard to first client device 100a, the operations in Figures 10a-10b can be performed by any suitable V2X application specific client and/or any suitable VAE client, for example, V2X application specific client 102a and VAE client 104a.

In Figure 10a-10b, at block 1001, processing circuitry 803 signals a request to a first server for a ToD support. The request can include a trigger and information for supporting the ToD event.

At block 1003, responsive to the request, processing circuitry 803 receives from the first server a response to the trigger for providing support for the ToD event.

In some embodiments, the trigger includes at least one of: an event of starting or stopping a ToO driving session and a specified event for receiving support from a remote driver.

In some embodiments, the information for supporting a ToD event comprises at least one of the following: a geographical start point and a geographical end point for the ToD event; a time start point and a time end point for the ToO event; a location trajectory for the vehicle for the ToD event; a capability of the vehicle for the ToD event; and a status of the vehicle for the ToO event.

In some embodiments, the response includes at least one of: a type of ToD service for providing support for the ToD event; a first indication indicating whether support for the ToD event is possible; a second indication indicating whether termination of support for the ToD event is possible; and a rejection of the request.

In some embodiments operations of the first client device further include the operations of blocks 1005 and 1007. At block 1005, processing circuitry 803 receives a request from a second client device for support for the ToD event. At block 1007, processing circuitry 803 processes the request from the second client device to identify a server for providing support for the ToD event. The processing is based on at least one of a current geographical location of the vehicle and a trajectory for the vehicle.

In some embodiments operations of the first client device further include the operations of blocks 1009 and 1011. At block 1009, processing circuitry 803 processes the response to identify the second client device that initiated the request. At block 1011, processing circuitry 803 signals the response to the second client device.

In some embodiments operations of the first client device further include the operations of block 1013. At block 1013, processing circuitry 803 establishes a ToD driving session when the response includes an indication that support for the ToD event is possible.

In some embodiments operations of the first client device further include the operations of block 1015. At block 1015, processing circuitry 803 receives a prediction from the server that the ToD event is likely in a future time period based on prediction information.

In some embodiments, the future time period comprises at least one of a defined prediction time period and a duration for the ToD event.

In some embodiments, the prediction information includes at least one of: an indication comprising a driver of the vehicle requests to operate the vehicle in a ToD mode; an indication comprising information from a sensor of the vehicle; an indication comprising map information from the vehicle; an indication comprising traffic information; and an indication comprising information from a ToD operator.

In some embodiments, the prediction includes a binary indicator that ToD is needed or that ToO is not needed.

In some embodiments operations of the first client device further include the operations of blocks 1017 and 1019. At block 1017, processing circuitry 803 predicts whether the ToD event is likely in a future time period based on prediction information. At block 1019, processing circuitry 803 signals the prediction to at least one of the vehicle and a control system for ToD driving of the vehicle when the prediction is that the ToD event is likely in the future time period.

In some embodiments, the future time period includes at least one of a defined prediction time period and a duration for the ToD event.

In some embodiments, the prediction information comprises at least one of: an indication comprising a driver of the vehicle requests to operate the vehicle in a ToD mode; an indication comprising information from a sensor of the vehicle; an indication comprising map information from the vehicle; an indication comprising traffic information; and an indication comprising information from a ToD operator.

In some embodiments, the prediction comprises a binary indicator that ToD is needed or that ToD is not needed.

In some embodiments operations of the first client device further include the operations of block 1021. At block 1021, processing circuitry 803 receives the prediction information from one or more of the vehicle, the second server, a network server, and a third party application server.

In some embodiments operations of the first client device further include the operations of block 1023. At block 1023, processing circuitry 803 decides whether adaption of a behavior of the vehicle is desired in preparation for the ToD event based on the prediction that the ToD event is likely in the future time period and adaption information.

In some embodiments, the future time period comprises at least one of the defined prediction time period, a duration for the ToD event, and a ToD configuration.

In some embodiments, the adaption information includes at least one of: an indication comprising information about current behavior of the vehicle; and an indication of one or more settings of the vehicle.

In some embodiments operations of the first client device further include the operations of block 1025. At block 1025, processing circuitry 803 selects at least one vehicle setting before starting an operation for the ToD event based on one or more of an indication including information from a sensor of the vehicle, an indication comprising map information from the vehicle, an indication comprising traffic information, and an indication comprising information from a ToD operator.

In some embodiments operations of the first client device further include the operations of block 1027. At block 1027, processing circuitry 803 selects a QoS for the network for the ToD event based on one or more of information of a ToD service provider and a QoS information of the network.

Various operations from the flow chart of Figures 10a-10b may be optional with respect to some embodiments of first client devices and related methods. Regarding methods of example embodiment 28 (set forth below), for example, operations of blocks 1005-1027 of Figures 10a-10b may be optional.

In the description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, microcode, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the spirit and scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

Further discussion of inventive concepts is provided in the document "Pseudo-CR on triggering teleoperated driving support" which is attached to the end of this disclosure as Appendix A.

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

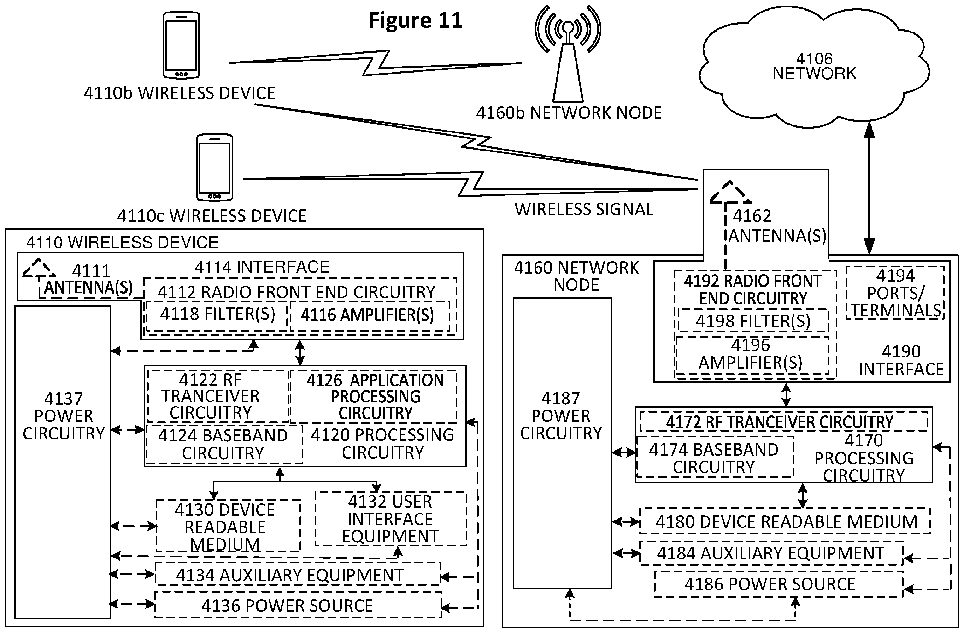

Figure 11 illustrates a wireless network in accordance with some embodiments.

Although the subject matter described herein may be implemented in any appropriate type of system using any suitable components, the embodiments disclosed herein are described in relation to a wireless network, such as the example wireless network illustrated in Figure 11. For simplicity, the wireless network of Figure 11 only depicts network 4106, network nodes 4160 and 4160b, and WDs 4110, 4110b, and 4110c (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node 4160 and wireless device (WD) 4110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 4106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 4160 and WD 4110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 11, network node 4160 includes processing circuitry 4170, device readable medium 4180, interface 4190, auxiliary equipment 4184, power source 4186, power circuitry 4187, and antenna 4162. Although network node 4160 illustrated in the example wireless network of Figure 11 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 4160 are depicted as single boxes located within a larger box, or nested within multiple boxes, in practice, a network node may comprise multiple different physical components that make up a single illustrated component (e.g., device readable medium 4180 may comprise multiple separate hard drives as well as multiple RAM modules).

Similarly, network node 4160 may be composed of multiple physically separate components (e.g., a NodeB component and a RNC component, or a BTS component and a BSC component, etc.), which may each have their own respective components. In certain scenarios in which network node 4160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 4160 may be configured to support multiple radio access technologies (RATs). In such embodiments, some components may be duplicated (e.g., separate device readable medium 4180 for the different RATs) and some components may be reused (e.g., the same antenna 4162 may be shared by the RATs). Network node 4160 may also include multiple sets of the various illustrated components for different wireless technologies integrated into network node 4160, such as, for example, GSM, WCDMA, LTE, NR, WiFi, or Bluetooth wireless technologies. These wireless technologies may be integrated into the same or different chip or set of chips and other components within network node 4160.

Processing circuitry 4170 is configured to perform any determining, calculating, or similar operations (e.g., certain obtaining operations) described herein as being provided by a network node. These operations performed by processing circuitry 4170 may include processing information obtained by processing circuitry 4170 by, for example, converting the obtained information into other information, comparing the obtained information or converted information to information stored in the network node, and/or performing one or more operations based on the obtained information or converted information, and as a result of said processing making a determination.

Processing circuitry 4170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 4160 components, such as device readable medium 4180, network node 4160 functionality. For example, processing circuitry 4170 may execute instructions stored in device readable medium 4180 or in memory within processing circuitry 4170. Such functionality may include providing any of the various wireless features, functions, or benefits discussed herein. In some embodiments, processing circuitry 4170 may include a system on a chip (SOC).

In some embodiments, processing circuitry 4170 may include one or more of radio frequency (RF) transceiver circuitry 4172 and baseband processing circuitry 4174. In some embodiments, radio frequency (RF) transceiver circuitry 4172 and baseband processing circuitry 4174 may be on separate chips (or sets of chips), boards, or units, such as radio units and digital units. In alternative embodiments, part or all of RF transceiver circuitry 4172 and baseband processing circuitry 4174 may be on the same chip or set of chips, boards, or units

In certain embodiments, some or all of the functionality described herein as being provided by a network node, base station, eNB or other such network device may be performed by processing circuitry 4170 executing instructions stored on device readable medium 4180 or memory within processing circuitry 4170. In alternative embodiments, some or all of the functionality may be provided by processing circuitry 4170 without executing instructions stored on a separate or discrete device readable medium, such as in a hard-wired manner. In any of those embodiments, whether executing instructions stored on a device readable storage medium or not, processing circuitry 4170 can be configured to perform the described functionality. The benefits provided by such functionality are not limited to processing circuitry 4170 alone or to other components of network node 4160, but are enjoyed by network node 4160 as a whole, and/or by end users and the wireless network generally.

Device readable medium 4180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 4170. Device readable medium 4180 may store any suitable instructions, data or information, including a computer program, software, an application including one or more of logic, rules, code, tables, etc. and/or other instructions capable of being executed by processing circuitry 4170 and, utilized by network node 4160. Device readable medium 4180 may be used to store any calculations made by processing circuitry 4170 and/or any data received via interface 4190. In some embodiments, processing circuitry 4170 and device readable medium 4180 may be considered to be integrated.

Interface 4190 is used in the wired or wireless communication of signalling and/or data between network node 4160, network 4106, and/or WDs 4110. As illustrated, interface 4190 comprises port(s)/terminal(s) 4194 to send and receive data, for example to and from network 4106 over a wired connection. Interface 4190 also includes radio front end circuitry 4192 that may be coupled to, or in certain embodiments a part of, antenna 4162. Radio front end circuitry 4192 comprises filters 4198 and amplifiers 4196. Radio front end circuitry 4192 may be connected to antenna 4162 and processing circuitry 4170. Radio front end circuitry may be configured to condition signals communicated between antenna 4162 and processing circuitry 4170. Radio front end circuitry 4192 may receive digital data that is to be sent out to other network nodes or WDs via a wireless connection. Radio front end circuitry 4192 may convert the digital data into a radio signal having the appropriate channel and bandwidth parameters using a combination of filters 4198 and/or amplifiers 4196. The radio signal may then be transmitted via antenna 4162. Similarly, when receiving data, antenna 4162 may collect radio signals which are then converted into digital data by radio front end circuitry 4192. The digital data may be passed to processing circuitry 4170. In other embodiments, the interface may comprise different components and/or different combinations of components.

In certain alternative embodiments, network node 4160 may not include separate radio front end circuitry 4192, instead, processing circuitry 4170 may comprise radio front end circuitry and may be connected to antenna 4162 without separate radio front end circuitry 4192. Similarly, in some embodiments, all or some of RF transceiver circuitry 4172 may be considered a part of interface 4190. In still other embodiments, interface 4190 may include one or more ports or terminals 4194, radio front end circuitry 4192, and RF transceiver circuitry 4172, as part of a radio unit (not shown), and interface 4190 may communicate with baseband processing circuitry 4174, which is part of a digital unit (not shown).

Antenna 4162 may include one or more antennas, or antenna arrays, configured to send and/or receive wireless signals. Antenna 4162 may be coupled to radio front end circuitry 4192 and may be any type of antenna capable of transmitting and receiving data and/or signals wirelessly. In some embodiments, antenna 4162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 4162 may be separate from network node 4160 and may be connectable to network node 4160 through an interface or port.

Antenna 4162, interface 4190, and/or processing circuitry 4170 may be configured to perform any receiving operations and/or certain obtaining operations described herein as being performed by a network node. Any information, data and/or signals may be received from a wireless device, another network node and/or any other network equipment. Similarly, antenna 4162, interface 4190, and/or processing circuitry 4170 may be configured to perform any transmitting operations described herein as being performed by a network node. Any information, data and/or signals may be transmitted to a wireless device, another network node and/or any other network equipment.

Power circuitry 4187 may comprise, or be coupled to, power management circuitry and is configured to supply the components of network node 4160 with power for performing the functionality described herein. Power circuitry 4187 may receive power from power source 4186. Power source 4186 and/or power circuitry 4187 may be configured to provide power to the various components of network node 4160 in a form suitable for the respective components (e.g., at a voltage and current level needed for each respective component). Power source 4186 may either be included in, or external to, power circuitry 4187 and/or network node 4160. For example, network node 4160 may be connectable to an external power source (e.g., an electricity outlet) via an input circuitry or interface such as an electrical cable, whereby the external power source supplies power to power circuitry 4187. As a further example, power source 4186 may comprise a source of power in the form of a battery or battery pack which is connected to, or integrated in, power circuitry 4187. The battery may provide backup power should the external power source fail. Other types of power sources, such as photovoltaic devices, may also be used.

Alternative embodiments of network node 4160 may include additional components beyond those shown in Figure 11 that may be responsible for providing certain aspects of the network node's functionality, including any of the functionality described herein and/or any functionality necessary to support the subject matter described herein. For example, network node 4160 may include user interface equipment to allow input of information into network node 4160 and to allow output of information from network node 4160. This may allow a user to perform diagnostic, maintenance, repair, and other administrative functions for network node 4160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (loT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

**As** illustrated, wireless device 4110 includes antenna 4111, interface 4114, processing circuitry 4120, device readable medium 4130, user interface equipment 4132, auxiliary equipment 4134, power source 4136 and power circuitry 4137. WD 4110 may include multiple sets of one or more of the illustrated components for different wireless technologies supported by WD 4110, such as, for example, GSM, WCDMA, LTE, NR, WiFi, WiMAX, or Bluetooth wireless technologies, just to mention a few. These wireless technologies may be integrated into the same or different chips or set of chips as other components within WD 4110.

Antenna 4111 may include one or more antennas or antenna arrays, configured to send and/or receive wireless signals, and is connected to interface 4114. In certain alternative embodiments, antenna 4111 may be separate from WD 4110 and be connectable to WD 4110 through an interface or port. Antenna 4111, interface 4114, and/or processing circuitry 4120 may be configured to perform any receiving or transmitting operations described herein as being performed by a WD. Any information, data and/or signals may be received from a network node and/or another WD. In some embodiments, radio front end circuitry and/or antenna 4111 may be considered an interface.

As illustrated, interface 4114 comprises radio front end circuitry 4112 and antenna 4111. Radio front end circuitry 4112 comprise one or more filters 4118 and amplifiers 4116. Radio front end circuitry 4112 is connected to antenna 4111 and processing circuitry 4120, and is configured to condition signals communicated between antenna 4111 and processing circuitry 4120. Radio front end circuitry 4112 may be coupled to or a part of antenna 4111. In some embodiments, WD 4110 may not include separate radio front end circuitry 4112; rather, processing circuitry 4120 may comprise radio front end circuitry and may be connected to antenna 4111. Similarly, in some embodiments, some or all of RF transceiver circuitry 4122 may be considered a part of interface 4114. Radio front end circuitry 4112 may receive digital data that is to be sent out to other network nodes or WDs via a wireless connection. Radio front end circuitry 4112 may convert the digital data into a radio signal having the appropriate channel and bandwidth parameters using a combination of filters 4118 and/or amplifiers 4116. The radio signal may then be transmitted via antenna 4111. Similarly, when receiving data, antenna 4111 may collect radio signals which are then converted into digital data by radio front end circuitry 4112. The digital data may be passed to processing circuitry 4120. In other embodiments, the interface may comprise different components and/or different combinations of components.

Processing circuitry 4120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 4110 components, such as device readable medium 4130, WD 4110 functionality. Such functionality may include providing any of the various wireless features or benefits discussed herein. For example, processing circuitry 4120 may execute instructions stored in device readable medium 4130 or in memory within processing circuitry 4120 to provide the functionality disclosed herein.

As illustrated, processing circuitry 4120 includes one or more of RF transceiver circuitry 4122, baseband processing circuitry 4124, and application processing circuitry 4126. In other embodiments, the processing circuitry may comprise different components and/or different combinations of components. In certain embodiments processing circuitry 4120 of WD 4110 may comprise a SOC. In some embodiments, RF transceiver circuitry 4122, baseband processing circuitry 4124, and application processing circuitry 4126 may be on separate chips or sets of chips. In alternative embodiments, part or all of baseband processing circuitry 4124 and application processing circuitry 4126 may be combined into one chip or set of chips, and RF transceiver circuitry 4122 may be on a separate chip or set of chips. In still alternative embodiments, part or all of RF transceiver circuitry 4122 and baseband processing circuitry 4124 may be on the same chip or set of chips, and application processing circuitry 4126 may be on a separate chip or set of chips. In yet other alternative embodiments, part or all of RF transceiver circuitry 4122, baseband processing circuitry 4124, and application processing circuitry 4126 may be combined in the same chip or set of chips. In some embodiments, RF transceiver circuitry 4122 may be a part of interface 4114. RF transceiver circuitry 4122 may condition RF signals for processing circuitry 4120.

In certain embodiments, some or all of the functionality described herein as being performed by a WD may be provided by processing circuitry 4120 executing instructions stored on device readable medium 4130, which in certain embodiments may be a computer-readable storage medium. In alternative embodiments, some or all of the functionality may be provided by processing circuitry 4120 without executing instructions stored on a separate or discrete device readable storage medium, such as in a hard-wired manner. In any of those particular embodiments, whether executing instructions stored on a device readable storage medium or not, processing circuitry 4120 can be configured to perform the described functionality. The benefits provided by such functionality are not limited to processing circuitry 4120 alone or to other components of WD 4110, but are enjoyed by WD 4110 as a whole, and/or by end users and the wireless network generally.

Processing circuitry 4120 may be configured to perform any determining, calculating, or similar operations (e.g., certain obtaining operations) described herein as being performed by a WD. These operations, as performed by processing circuitry 4120, may include processing information obtained by processing circuitry 4120 by, for example, converting the obtained information into other information, comparing the obtained information or converted information to information stored by WD 4110, and/or performing one or more operations based on the obtained information or converted information, and as a result of said processing making a determination.

Device readable medium 4130 may be operable to store a computer program, software, an application including one or more of logic, rules, code, tables, etc. and/or other instructions capable of being executed by processing circuitry 4120. Device readable medium 4130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 4120. In some embodiments, processing circuitry 4120 and device readable medium 4130 may be considered to be integrated.

User interface equipment 4132 may provide components that allow for a human user to interact with WD 4110. Such interaction may be of many forms, such as visual, audial, tactile, etc. User interface equipment 4132 may be operable to produce output to the user and to allow the user to provide input to WD 4110. The type of interaction may vary depending on the type of user interface equipment 4132 installed in WD 4110. For example, if WD 4110 is a smart phone, the interaction may be via a touch screen; if WD 4110 is a smart meter, the interaction may be through a screen that provides usage (e.g., the number of gallons used) or a speaker that provides an audible alert (e.g., if smoke is detected). User interface equipment 4132 may include input interfaces, devices and circuits, and output interfaces, devices and circuits. User interface equipment 4132 is configured to allow input of information into WD 4110, and is connected to processing circuitry 4120 to allow processing circuitry 4120 to process the input information. User interface equipment 4132 may include, for example, a microphone, a proximity or other sensor, keys/buttons, a touch display, one or more cameras, a USB port, or other input circuitry. User interface equipment 4132 is also configured to allow output of information from WD 4110, and to allow processing circuitry 4120 to output information from WD 4110. User interface equipment 4132 may include, for example, a speaker, a display, vibrating circuitry, a USB port, a headphone interface, or other output circuitry. Using one or more input and output interfaces, devices, and circuits, of user interface equipment 4132, WD 4110 may communicate with end users and/or the wireless network, and allow them to benefit from the functionality described herein.

Auxiliary equipment 4134 is operable to provide more specific functionality which may not be generally performed by WDs. This may comprise specialized sensors for doing measurements for various purposes, interfaces for additional types of communication such as wired communications etc. The inclusion and type of components of auxiliary equipment 4134 may vary depending on the embodiment and/or scenario.

Power source 4136 may, in some embodiments, be in the form of a battery or battery pack. Other types of power sources, such as an external power source (e.g., an electricity outlet), photovoltaic devices or power cells, may also be used. WD 4110 may further comprise power circuitry 4137 for delivering power from power source 4136 to the various parts of WD 4110 which need power from power source 4136 to carry out any functionality described or indicated herein. Power circuitry 4137 may in certain embodiments comprise power management circuitry. Power circuitry 4137 may additionally or alternatively be operable to receive power from an external power source; in which case WD 4110 may be connectable to the external power source (such as an electricity outlet) via input circuitry or an interface such as an electrical power cable. Power circuitry 4137 may also in certain embodiments be operable to deliver power from an external power source to power source 4136. This may be, for example, for the charging of power source 4136. Power circuitry 4137 may perform any formatting, converting, or other modification to the power from power source 4136 to make the power suitable for the respective components of WD 4110 to which power is supplied.

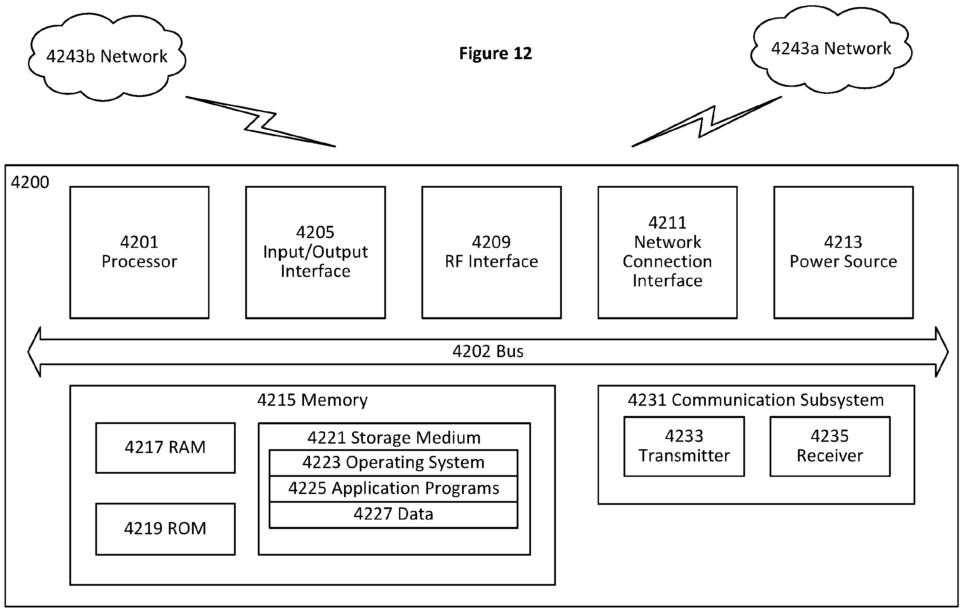

Figure 12 illustrates a user Equipment in accordance with some embodiments.

Figure 12 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 42200 may be any UE identified by the 3rd Generation Partnership Project (3GPP), including a NB-loT UE, a machine type communication (MTC) UE, and/or an enhanced MTC (eMTC) UE. UE 4200, as illustrated in Figure 12, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 12 is a UE, the components discussed herein are equally applicable to a WD, and vice-versa.

In Figure 12, UE 4200 includes processing circuitry 4201 that is operatively coupled to input/output interface 4205, radio frequency (RF) interface 4209, network connection interface 4211, memory 4215 including random access memory (RAM) 4217, read-only memory (ROM) 4219, and storage medium 4221 or the like, communication subsystem 4231, power source 4213, and/or any other component, or any combination thereof. Storage medium 4221 includes operating system 4223, application program 4225, and data 4227. In other embodiments, storage medium 4221 may include other similar types of information. Certain UEs may utilize all of the components shown in Figure 12, or only a subset of the components. The level of integration between the components may vary from one UE to another UE. Further, certain UEs may contain multiple instances of a component, such as multiple processors, memories, transceivers, transmitters, receivers, etc.

In Figure 12, processing circuitry 4201 may be configured to process computer instructions and data. Processing circuitry 4201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 4201 may include two central processing units (CPUs). Data may be information in a form suitable for use by a computer.

In the depicted embodiment, input/output interface 4205 may be configured to provide a communication interface to an input device, output device, or input and output device. UE 4200 may be configured to use an output device via input/output interface 4205. An output device may use the same type of interface port as an input device. For example, a USB port may be used to provide input to and output from UE 4200. The output device may be a speaker, a sound card, a video card, a display, a monitor, a printer, an actuator, an emitter, a smartcard, another output device, or any combination thereof. UE 4200 may be configured to use an input device via input/output interface 4205 to allow a user to capture information into UE 4200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 12, RF interface 4209 may be configured to provide a communication interface to RF components such as a transmitter, a receiver, and an antenna. Network connection interface 4211 may be configured to provide a communication interface to network 4243a. Network 4243a may encompass wired and/or wireless networks such as a local-area network (LAN), a wide-area network (WAN), a computer network, a wireless network, a telecommunications network, another like network or any combination thereof. For example, network 4243a may comprise a Wi-Fi network. Network connection interface 4211 may be configured to include a receiver and a transmitter interface used to communicate with one or more other devices over a communication network according to one or more communication protocols, such as Ethernet, TCP/IP, SONET, ATM, or the like. Network connection interface 4211 may implement receiver and transmitter functionality appropriate to the communication network links (e.g., optical, electrical, and the like). The transmitter and receiver functions may share circuit components, software or firmware, or alternatively may be implemented separately.

RAM 4217 may be configured to interface via bus 4202 to processing circuitry 4201 to provide storage or caching of data or computer instructions during the execution of software programs such as the operating system, application programs, and device drivers. ROM 4219 may be configured to provide computer instructions or data to processing circuitry 4201. For example, ROM 4219 may be configured to store invariant low-level system code or data for basic system functions such as basic input and output (I/O), startup, or reception of keystrokes from a keyboard that are stored in a non-volatile memory. Storage medium 4221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 4221 may be configured to include operating system 4223, application program 4225 such as a web browser application, a widget or gadget engine or another application, and data file 4227. Storage medium 4221 may store, for use by UE 4200, any of a variety of various operating systems or combinations of operating systems.

Storage medium 4221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 4221 may allow UE 4200 to access computer-executable instructions, application programs or the like, stored on transitory or non-transitory memory media, to off-load data, or to upload data. An article of manufacture, such as one utilizing a communication system may be tangibly embodied in storage medium 4221, which may comprise a device readable medium.

In Figure 12, processing circuitry 4201 may be configured to communicate with network 4243b using communication subsystem 4231. Network 4243a and network 4243b may be the same network or networks or different network or networks. Communication subsystem 4231 may be configured to include one or more transceivers used to communicate with network 4243b. For example, communication subsystem 4231 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 4233 and/or receiver 4235 to implement transmitter or receiver functionality, respectively, appropriate to the RAN links (e.g., frequency allocations and the like). Further, transmitter 4233 and receiver 4235 of each transceiver may share circuit components, software or firmware, or alternatively may be implemented separately.

In the illustrated embodiment, the communication functions of communication subsystem 4231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 4231 may include cellular communication, Wi-Fi communication, Bluetooth communication, and GPS communication. Network 4243b may encompass wired and/or wireless networks such as a local-area network (LAN), a wide-area network (WAN), a computer network, a wireless network, a telecommunications network, another like network or any combination thereof. For example, network 4243b may be a cellular network, a Wi-Fi network, and/or a near-field network. Power source 4213 may be configured to provide alternating current (AC) or direct current (DC) power to components of UE 4200.

**The** features, benefits and/or functions described herein may be implemented in one of the components of UE 4200 or partitioned across multiple components of UE 4200. Further, the features, benefits, and/or functions described herein may be implemented in any combination of hardware, software or firmware. In one example, communication subsystem 4231 may be configured to include any of the components described herein. Further, processing circuitry 4201 may be configured to communicate with any of such components over bus 4202. In another example, any of such components may be represented by program instructions stored in memory that when executed by processing circuitry 4201 perform the corresponding functions described herein. In another example, the functionality of any of such components may be partitioned between processing circuitry 4201 and communication subsystem 4231. In another example, the non-computationally intensive functions of any of such components may be implemented in software or firmware and the computationally intensive functions may be implemented in hardware.

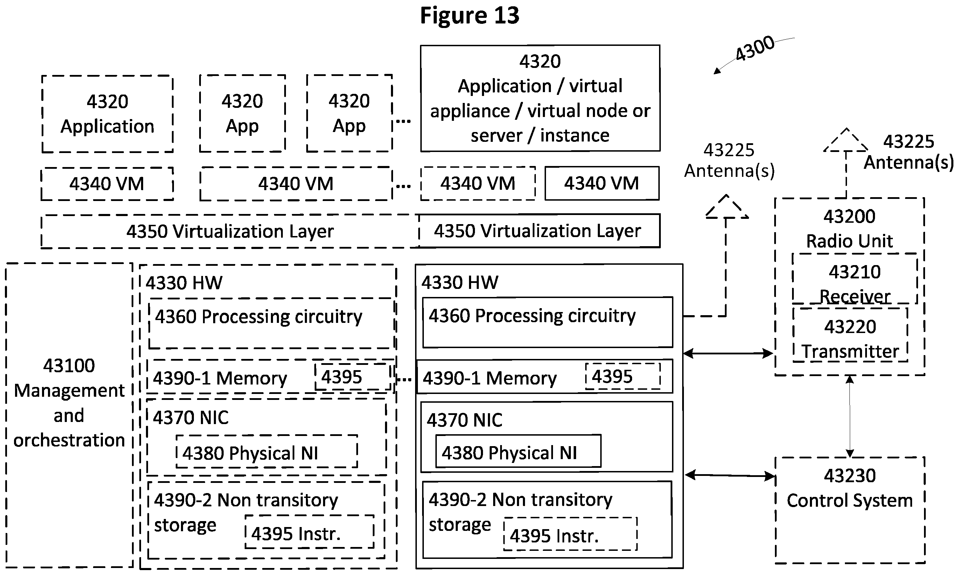

Figure 13 illustrates a virtualization environment in accordance with some embodiments.

Figure 13 is a schematic block diagram illustrating a virtualization environment 4300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 4300 hosted by one or more of hardware nodes 4330. Further, in embodiments in which the virtual node is not a radio access node or does not require radio connectivity (e.g., a core network node), then the network node may be entirely virtualized.

The functions may be implemented by one or more applications 4320 (which may alternatively be called software instances, virtual appliances, network functions, virtual nodes, virtual network functions, etc.) operative to implement some of the features, functions, and/or benefits of some of the embodiments disclosed herein. Applications 4320 are run in virtualization environment 4300 which provides hardware 4330 comprising processing circuitry 4360 and memory 4390. Memory 4390 contains instructions 4395 executable by processing circuitry 4360 whereby application 4320 is operative to provide one or more of the features, benefits, and/or functions disclosed herein.

Virtualization environment 4300, comprises general-purpose or special-purpose network hardware devices 4330 comprising a set of one or more processors or processing circuitry 4360, which may be commercial off-the-shelf (COTS) processors, dedicated Application Specific Integrated Circuits (ASICs), or any other type of processing circuitry including digital or analog hardware components or special purpose processors. Each hardware device may comprise memory 4390-1 which may be non-persistent memory for temporarily storing instructions 4395 or software executed by processing circuitry 4360. Each hardware device may comprise one or more network interface controllers (NICs) 4370, also known as network interface cards, which include physical network interface 4380. Each hardware device may also include non-transitory, persistent, machine-readable storage media 4390-2 having stored therein software 4395 and/or instructions executable by processing circuitry 4360. Software 4395 may include any type of software including software for instantiating one or more virtualization layers 4350 (also referred to as hypervisors), software to execute virtual machines 4340 as well as software allowing it to execute functions, features and/or benefits described in relation with some embodiments described herein.

Virtual machines 4340 comprise virtual processing, virtual memory, virtual networking or interface and virtual storage, and may be run by a corresponding virtualization layer 4350 or hypervisor. Different embodiments of the instance of virtual appliance 4320 may be implemented on one or more of virtual machines 4340, and the implementations may be made in different ways.

During operation, processing circuitry 4360 executes software 4395 to instantiate the hypervisor or virtualization layer 4350, which may sometimes be referred to as a virtual machine monitor (VMM). Virtualization layer 4350 may present a virtual operating platform that appears like networking hardware to virtual machine 4340.

As shown in Figure 13, hardware 4330 may be a standalone network node with generic or specific components. Hardware 4330 may comprise antenna 43225 and may implement some functions via virtualization. Alternatively, hardware 4330 may be part of a larger cluster of hardware (e.g. such as in a data center or customer premise equipment (CPE)) where many hardware nodes work together and are managed via management and orchestration (MANO) 43100, which, among others, oversees lifecycle management of applications 4320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 4340 may be a software implementation of a physical machine that runs programs as if they were executing on a physical, non-virtualized machine. Each of virtual machines 4340, and that part of hardware 4330 that executes that virtual machine, be it hardware dedicated to that virtual machine and/or hardware shared by that virtual machine with others of the virtual machines 4340, forms a separate virtual network elements (VNE).

Still in the context of NFV, Virtual Network Function (VNF) is responsible for handling specific network functions that run in one or more virtual machines 4340 on top of hardware networking infrastructure 4330 and corresponds to application 4320 in Figure 13.

In some embodiments, one or more radio units 43200 that each include one or more transmitters 43220 and one or more receivers 43210 may be coupled to one or more antennas 43225. Radio units 43200 may communicate directly with hardware nodes 4330 via one or more appropriate network interfaces and may be used in combination with the virtual components to provide a virtual node with radio capabilities, such as a radio access node or a base station.

In some embodiments, some signalling can be effected with the use of control system 43230 which may alternatively be used for communication between the hardware nodes 4330 and radio units 43200.

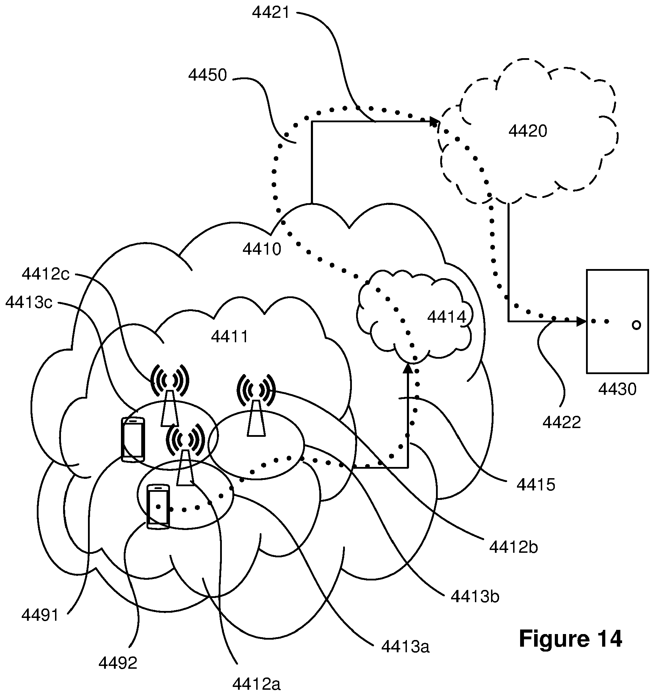

Figure 14 illustrates a telecommunication network connected via an intermediate network to a host computer in accordance with some embodiments.

With reference to Figure 14, in accordance with an embodiment, a communication system includes telecommunication network 4410, such as a 3GPP-type cellular network, which comprises access network 4411, such as a radio access network, and core network 4414. Access network 4411 comprises a plurality of base stations 4412a, 4412b, 4412c, such as NBs, eNBs, gNBs or other types of wireless access points, each defining a corresponding coverage area 4413a, 4413b, 4413c. Each base station 4412a, 4412b, 4412c is connectable to core network 4414 over a wired or wireless connection 4415. A first UE 4491 located in coverage area 4413c is configured to wirelessly connect to, or be paged by, the corresponding base station 4412c. A second UE 4492 in coverage area 4413a is wirelessly connectable to the corresponding base station 4412a. While a plurality of UEs 4491, 4492 are illustrated in this example, the disclosed embodiments are equally applicable to a situation where a sole UE is in the coverage area or where a sole UE is connecting to the corresponding base station 4412.

Telecommunication network 4410 is itself connected to host computer 4430, which may be embodied in the hardware and/or software of a standalone server, a cloud-implemented server, a distributed server or as processing resources in a server farm. Host computer 4430 may be under the ownership or control of a service provider, or may be operated by the service provider or on behalf of the service provider. Connections 4421 and 4422 between telecommunication network 4410 and host computer 4430 may extend directly from core network 4414 to host computer 4430 or may go via an optional intermediate network 4420. Intermediate network 4420 may be one of, or a combination of more than one of, a public, private or hosted network; intermediate network 4420, if any, may be a backbone network or the Internet; in particular, intermediate network 4420 may comprise two or more sub-networks (not shown).

The communication system of Figure 14 as a whole enables connectivity between the connected UEs 4491, 4492 and host computer 4430. The connectivity may be described as an over-the-top (OTT) connection 4450. Host computer 4430 and the connected UEs 4491, 4492 are configured to communicate data and/or signaling via OTT connection 4450, using access network 4411, core network 4414, any intermediate network 4420 and possible further infrastructure (not shown) as intermediaries. OTT connection 4450 may be transparent in the sense that the participating communication devices through which OTT connection 4450 passes are unaware of routing of uplink and downlink communications. For example, base station 4412 may not or need not be informed about the past routing of an incoming downlink communication with data originating from host computer 4430 to be forwarded (e.g., handed over) to a connected UE 4491. Similarly, base station 4412 need not be aware of the future routing of an outgoing uplink communication originating from the UE 4491 towards the host computer 4430.

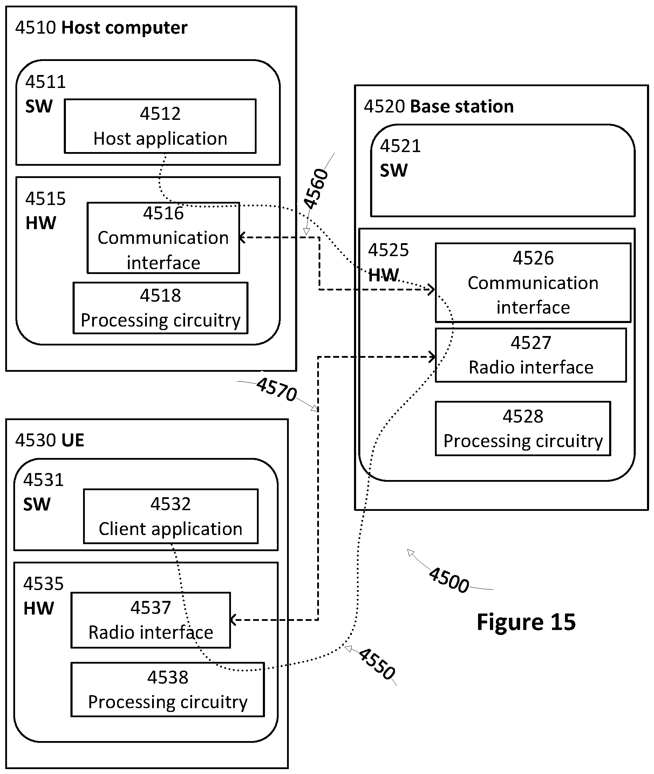

Figure 15 illustrates a host computer communicating via a base station with a user equipment over a partially wireless connection in accordance with some embodiments.

Example implementations, in accordance with an embodiment, of the UE, base station and host computer discussed in the preceding paragraphs will now be described with reference to Figure 15. In communication system 4500, host computer 4510 comprises hardware 4515 including communication interface 4516 configured to set up and maintain a wired or wireless connection with an interface of a different communication device of communication system 4500. Host computer 4510 further comprises processing circuitry 4518, which may have storage and/or processing capabilities. In particular, processing circuitry 4518 may comprise one or more programmable processors, application-specific integrated circuits, field programmable gate arrays or combinations of these (not shown) adapted to execute instructions. Host computer 4510 further comprises software 4511, which is stored in or accessible by host computer 4510 and executable by processing circuitry 4518. Software 4511 includes host application 4512. Host application 4512 may be operable to provide a service to a remote user, such as UE 4530 connecting via OTT connection 4550 terminating at UE 4530 and host computer 4510. In providing the service to the remote user, host application 4512 may provide user data which is transmitted using OTT connection 4550.

Communication system 4500 further includes base station 4520 provided in a telecommunication system and comprising hardware 4525 enabling it to communicate with host computer 4510 and with UE 4530. Hardware 4525 may include communication interface 4526 for setting up and maintaining a wired or wireless connection with an interface of a different communication device of communication system 4500, as well as radio interface 4527 for setting up and maintaining at least wireless connection 4570 with UE 4530 located in a coverage area (not shown in Figure 15) served by base station 4520. Communication interface 4526 may be configured to facilitate connection 4560 to host computer 4510. Connection 4560 may be direct or it may pass through a core network (not shown in Figure 15) of the telecommunication system and/or through one or more intermediate networks outside the telecommunication system. In the embodiment shown, hardware 4525 of base station 4520 further includes processing circuitry 4528, which may comprise one or more programmable processors, application-specific integrated circuits, field programmable gate arrays or combinations of these (not shown) adapted to execute instructions. Base station 4520 further has software 4521 stored internally or accessible via an external connection.

Communication system 4500 further includes UE 4530 already referred to. Its hardware 4535 may include radio interface 4537 configured to set up and maintain wireless connection 4570 with a base station serving a coverage area in which UE 4530 is currently located. Hardware 4535 of UE 4530 further includes processing circuitry 4538, which may comprise one or more programmable processors, application-specific integrated circuits, field programmable gate arrays or combinations of these (not shown) adapted to execute instructions. UE 4530 further comprises software 4531, which is stored in or accessible by UE 4530 and executable by processing circuitry 4538. Software 4531 includes client application 4532. Client application 4532 may be operable to provide a service to a human or non-human user via UE 4530, with the support of host computer 4510. In host computer 4510, an executing host application 4512 may communicate with the executing client application 4532 via OTT connection 4550 terminating at UE 4530 and host computer 4510. In providing the service to the user, client application 4532 may receive request data from host application 4512 and provide user data in response to the request data. OTT connection 4550 may transfer both the request data and the user data. Client application 4532 may interact with the user to generate the user data that it provides.

It is noted that host computer 4510, base station 4520 and UE 4530 illustrated in Figure 15 may be similar or identical to host computer 4430, one of base stations 4412a, 4412b, 4412c and one of UEs 4491, 4492 of Figure 14, respectively. This is to say, the inner workings of these entities may be as shown in Figure 15 and independently, the surrounding network topology may be that of Figure 14.

In Figure 15, OTT connection 4550 has been drawn abstractly to illustrate the communication between host computer 4510 and UE 4530 via base station 4520, without explicit reference to any intermediary devices and the precise routing of messages via these devices. Network infrastructure may determine the routing, which it may be configured to hide from UE 4530 or from the service provider operating host computer 4510, or both. While OTT connection 4550 is active, the network infrastructure may further take decisions by which it dynamically changes the routing (e.g., on the basis of load balancing consideration or reconfiguration of the network).

Wireless connection 4570 between UE 4530 and base station 4520 is in accordance with the teachings of the embodiments described throughout this disclosure. One or more of the various embodiments may improve the performance of OTT services provided to UE 4530 using OTT connection 4550, in which wireless connection 4570 forms the last segment. More precisely, the teachings of these embodiments may improve the random access speed and/or reduce random access failure rates and thereby provide benefits such as faster and/or more reliable random access.

A measurement procedure may be provided for the purpose of monitoring data rate, latency and other factors on which the one or more embodiments improve. There may further be an optional network functionality for reconfiguring OTT connection 4550 between host computer 4510 and UE 4530, in response to variations in the measurement results. The measurement procedure and/or the network functionality for reconfiguring OTT connection 4550 may be implemented in software 4511 and hardware 4515 of host computer 4510 or in software 4531 and hardware 4535 of UE 4530, or both. In embodiments, sensors (not shown) may be deployed in or in association with communication devices through which OTT connection 4550 passes; the sensors may participate in the measurement procedure by supplying values of the monitored quantities exemplified above, or supplying values of other physical quantities from which software 4511, 4531 may compute or estimate the monitored quantities. The reconfiguring of OTT connection 4550 may include message format, retransmission settings, preferred routing etc.; the reconfiguring need not affect base station 4520, and it may be unknown or imperceptible to base station 4520. Such procedures and functionalities may be known and practiced in the art. In certain embodiments, measurements may involve proprietary UE signaling facilitating host computer 4510's measurements of throughput, propagation times, latency and the like. The measurements may be implemented in that software 4511 and 4531 causes messages to be transmitted, in particular empty or 'dummy' messages, using OTT connection 4550 while it monitors propagation times, errors etc.

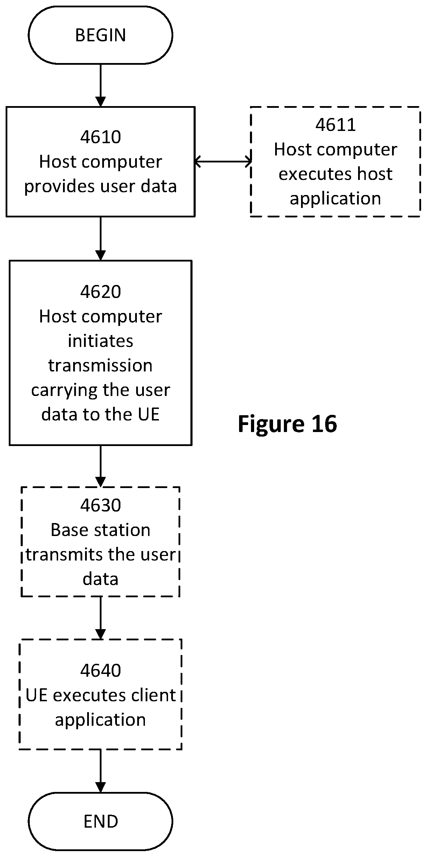

Figure 16 illustrates methods implemented in a communication system including a host computer, a base station and a user equipment in accordance with some embodiments

Figure 16 is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 16 will be included in this section. In step 4610, the host computer provides user data. In substep 4611 (which may be optional) of step 4610, the host computer provides the user data by executing a host application. In step 4620, the host computer initiates a transmission carrying the user data to the UE. In step 4630 (which may be optional), the base station transmits to the UE the user data which was carried in the transmission that the host computer initiated, in accordance with the teachings of the embodiments described throughout this disclosure. In step 4640 (which may also be optional), the UE executes a client application associated with the host application executed by the host computer.

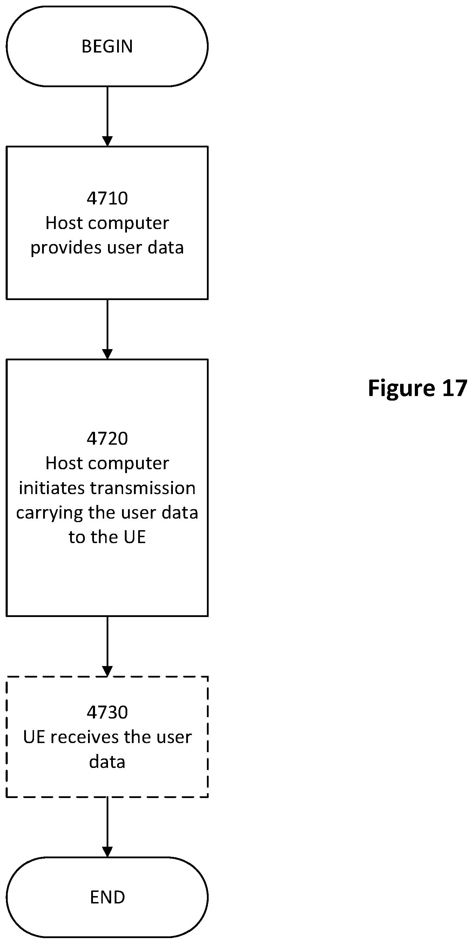

Figure 17 illustrates methods implemented in a communication system including a host computer, a base station and a user equipment in accordance with some embodiments.

Figure 17 is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 17 will be included in this section. In step 4710 of the method, the host computer provides user data. In an optional substep (not shown) the host computer provides the user data by executing a host application. In step 4720, the host computer initiates a transmission carrying the user data to the UE. The transmission may pass via the base station, in accordance with the teachings of the embodiments described throughout this disclosure. In step 4730 (which may be optional), the UE receives the user data carried in the transmission.

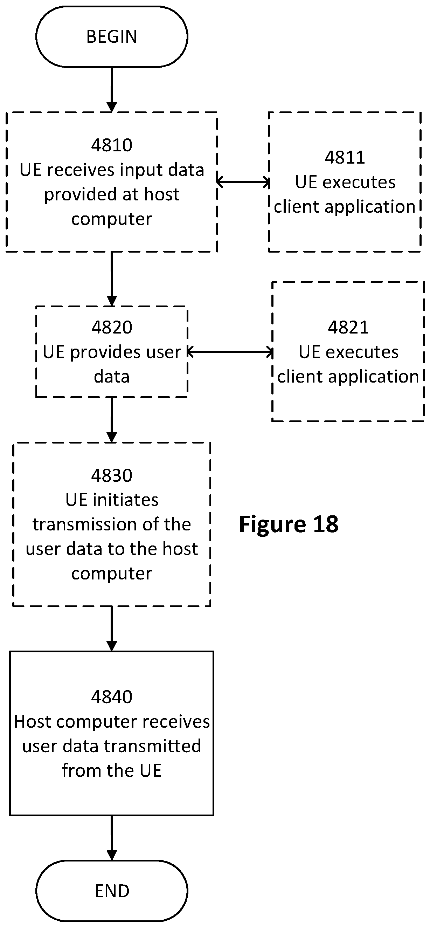

Figure 18 illustrates methods implemented in a communication system including a host computer, a base station and a user equipment in accordance with some embodiments

Figure 18 is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 18 will be included in this section. In step 4810 (which may be optional), the UE receives input data provided by the host computer. Additionally or alternatively, in step 4820, the UE provides user data. In substep 4821 (which may be optional) of step 4820, the UE provides the user data by executing a client application. In substep 4811 (which may be optional) of step 4810, the UE executes a client application which provides the user data in reaction to the received input data provided by the host computer. In providing the user data, the executed client application may further consider user input received from the user. Regardless of the specific manner in which the user data was provided, the UE initiates, in substep 4830 (which may be optional), transmission of the user data to the host computer. In step 4840 of the method, the host computer receives the user data transmitted from the UE, in accordance with the teachings of the embodiments described throughout this disclosure.

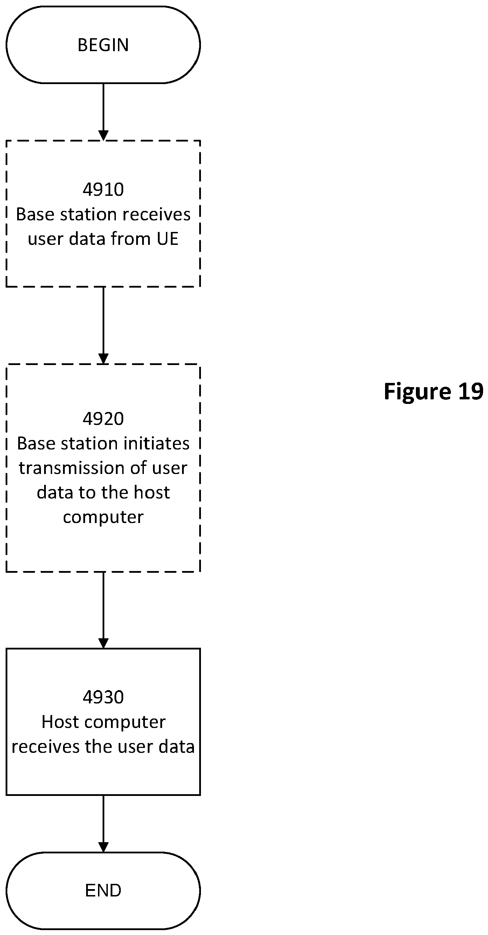

Figure 19 illustrates methods implemented in a communication system including a host computer, a base station and a user equipment in accordance with some embodiments

Figure 19 is a flowchart illustrating a method implemented in a communication system, in accordance with one embodiment. The communication system includes a host computer, a base station and a UE which may be those described with reference to Figures 14 and 15. For simplicity of the present disclosure, only drawing references to Figure 19 will be included in this section. In step 4910 (which may be optional), in accordance with the teachings of the embodiments described throughout this disclosure, the base station receives user data from the UE. In step 4920 (which may be optional), the base station initiates transmission of the received user data to the host computer. In step 4930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

**The** term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- Ix RTT: CDMA2000 lx Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH: Ec/No CPICH Received energy per chip divided by the power density in the band
- CQI: Channel Quality information
- C-RNTI: Cell RNTI
- CSI: Channel State Information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- ITS: Intelligent Transport Systems
- ITS-S: ITS Station
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS: MBSFN Almost Blank Subframe
- MDT: Minimization of Drive Tests
- MIB: Master Information Block
- MME: Mobility Management Entity
- MSC: Mobile Switching Center
- NPDCCH: Narrowband Physical Downlink Control Channel
- NR: New Radio
- OCNGOFDMA: Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RD: Remote Driving
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving GatewaySI System Information
- SIB: System Information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- ToD: Tele-Operated Driving
- TSS: Tertiary Synchronization Signal
- TTI: Transmission Time Interval
- UE: User Equipment
- UL: Uplink
- UMTS: Universal Mobile Telecommunication System
- USIM: Universal Subscriber Identity Module
- UTDOA: Uplink Time Difference of Arrival
- UTRA: Universal Terrestrial Radio Access
- UTRAN: Universal Terrestrial Radio Access Network
- V2X AS: V2X Application Server
- VAE: V2X Application Enabler
- V2X UE: User Equipment
- V2X: Vehicle to Everything
- VAL: Vertical Application Layer
- WCDMA: Wide CDMA
- WLAN: Wide Local Area Network

References are identified below:
1. 3GPP TS 23.286, Application layer support for V2X services; Functional architecture and information flows, V16.1.0, 06-2019.
2. 3GPP TS 23.434, Service Enabler Architecture Layer for Verticals; Functional architecture and information flows, V16.1.0, 06-2019.
3. 3GPP TR 23.795, Study on application layer support for V2X services, V16.0.0, Sept. 2018.
4. 3GPP TR 23.764, Study on enhancements to application layer support for V2X services, V0.2.0, July 2019.
5. 3GPP TR 22.886, Study on enhancement of 3GPP support for 5G V2X services, V16.2.0, December 2018.
6. 3GPP TS 22.186, Service requirements for enhanced V2X scenarios, V16.2.0, June 2019.
7. 5GAA T-190028, 5G Automotive Association; Working Group Use Cases and Technical Requirements; 5G Use Cases and Requirements - Wave 2.1; V1.0 (2019/01/30)
8. 5GAA XWGS-190009 Work Item Description, Requirements and architecture for Tele-operated Driving.

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the spirit and scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

### APPENDIX A

### 3GPP TSG-SA WG6 Meeting #36-e Pseudo-CR on triggering teleoperated driving support

### 1. Introduction

This contribution proposes a new solution for key issue #4 where VAE capabilities at the client and server enable triggering request for Tele-operated driving (ToD) support from the vehicle and providing related requirements to the server, which will remotely operate the vehicle (i.e. provding the ToD service to the vehicle).

In tele-operated driving (ToD), a remote driver, either human or machine, interacts with the vehicle that is remotely driven. For instance, in some implementations a remote driver provides trajectories to the vehicle driving in an autonomous manner to the available/predefined parking spot. In other implementations, a remote driver (human or machine) undertakes to operate the vehicle (i.e., sending steering/command instruction).

There are several example use-cases where ToD support is needed:
- The driver or the automated driving system of vehicle relies on a remote driver to take control of the vehicle for a period of time to the destination.
- The driver or the automated driving system of vehicle that enters a construction zone or the scene of an accident sends a tele-operated driving request to the remote driver to take control of the vehicle for a limited time period and area.
- Automated parking: The driver or the automated driving system of vehicle enters a public or private parking area and requests remote driving support for automated parking.
- Infrastructure based tele-operated driving: This is a way of implementing ToD using the data and inputs from infrastructure sensors and cameras to the remote driver, instead of only from the on-board sensors and cameras of the vehicle.

Consequently, there are two levels of control:
- A remote driver sends assisting information as trajectory information (e.g. way points) to the vehicle or automated driving system which is still in charge of the operation control of the vehicle, e.g. angle of the steering wheel, braking, and accelerating.
- A remote driver takes full control of driving the car and is able to remotely operate the car e.g. control acceleration, angle of steering wheels.

In all use-cases, the trigger for ToD support comes from the V2X UE along with necessary information to operate the vehicle (e.g., start and end points in the form of geographical and/or time points, location information such as trajectory of the vehicle, capability/situation of the vehicle).

### 2. Reason for Change

The triggers for ToD support and required information to operate the vehcile by the server should be added.

### 3. Conclusions

### <Conclusion part (optional)>

### 4. Proposal

It is proposed to agree the following changes to 3GPP TR 23.764 v0.4.

### * * * First Change * * * *

### 1.1 5.4 Key issue 4 - Support for tele-operated driving

Tele-operated driving allows a remote driver to interact with one or more vehicles, the remote driver acting as a V2X application server and the vehicles as V2X UEs. The communication is typically one-to-one where a V2X application server establishes a tele-operated driving session with one or more V2X UEs.

It requires further study:
- Supporting functions are required at the VAE layer to enable as tele-operated driving between the V2X application server and one or more V2X UEs.
- Required information at the V2X application server to remotely operate the vehicle.

### * * * Next Change * * * *

### 1.2 7.X Solution #X: Triggering ToD support by V2X UE

### 1.2.1 7.x.1 Solution description

### 1.2.1.1 7.X. 1.1 General

This solution addresses the key issue #4. V2X UEs requiring ToD support issue a ToD request to the server and communicate the information needed by the V2X application server to remotely operate the vehicle.

### 1.2.1.2 7.X. 1.2 Procedure

Pre-conditions:
1. The V2X UE has subscribed to a tele-operated driving service.
2. The V2X UE has already discovered one or more VAE servers that provide a tele-operated driving service.

NOTE 1: The current procedure can be applied for other services that require server support for a limited time. 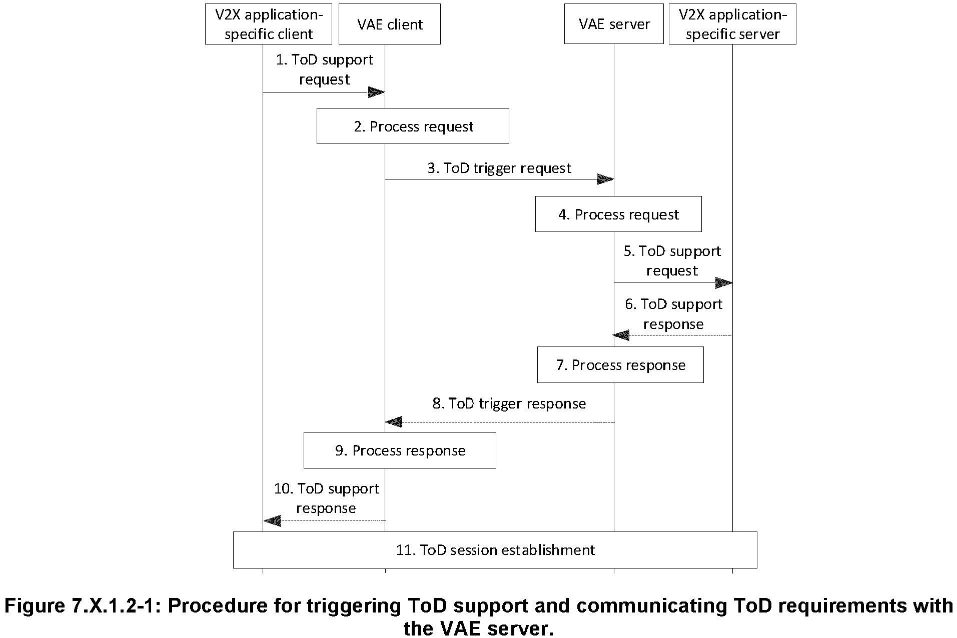
   1. The V2X application-specific client has determined a current or upcoming situation which requires ToD support and triggers the VAE client to initiate a ToD request along with ToD requirements (e.g. start and end points in the form of geographical and/or time points, location information such as trajectory of the vehicle, capability/situation of the vehicle, e.g. if it can perform automated driving based on the trajectory from the remote driver, or it will rely on the remote operational control by the remote driver).
   2. The VAE client processes the ToD support request. The VAE client may determine the VAE server based e.g. on current geographical location of the vehicle or vehicle trajectory from the list of available VAE servers that provide ToD service and their serving geographical areas.
   3. The VAE client sends a ToD trigger request with the ToD requirements (e.g. start and end points) to the VAE server.
   4. The VAE server processes the ToD trigger request and determines the V2X application-specific server for ToD support (acts as remote driver). The VAE server may decide based on network and QoS related parameters of the network the available ToD support, e.g., which kind of ToD service (trajectory or operational control) it can provide depending on the network conditions.
NOTE 2: This step might require interaction with the network to retrieve QoS information, if not available at the VAE server.
NOTE 3: According to available or retrieved network and QoS related information for ToD support, as well as considering whether there is an available V2X application-specific server for ToD support, the VAE server may also reject the ToD request.
   5. The VAE server provides a ToD support request to V2X application-specific server.
NOTE 4: The ToD service request can be provided to the V2X application-specific server (bypassing VAE server), in this case the V2X application specific server can decide on the type of ToD service.
   6. The V2X application-specific server provides a ToD support response to the VAE server indicating if ToD support is possible.
   7. The VAE server processes the ToD support response from the V2X application-specific server (e.g. stores V2X application-specific server which serves the V2X UE).
   8. The VAE server provides a ToD trigger response to the VAE client.
NOTE 5: The VAE server can provide additional information with the ToD trigger response such as network information and QoS related information. The ToD application specific client may adapt its behaviour according to the QoS notification information.
   9. The VAE client can process the response e.g. determine V2X application-specific client who initiated the ToD support request.
   10. The VAE client provides a ToD support response to the V2X application-specific client.
   11. A tele-operated driving session can be established as described in subclause 7.1 in case of success response.

### 1.2.2 7.X.2 Solution evaluation

This is a vailable solution to trigger tele-operated driving support by the V2X UE and provide the required information to the V2X application specific server to establish the service session for remotely operating the vehicle.

* * * Next Change * * * *

## Claims

1. A method performed by a first server (110, 700) communicatively connected to a network (108) for supporting tele-operated driving, ToD, of a vehicle, the first server (110, 700) comprising a VAE server, **characterized in that** the method comprising:
• receiving (901) a request from a client device for a ToD support, wherein the request comprises a trigger and information for supporting the ToD;
• determining, by the VAE server of the first server (110, 700) a V2X application-specific server for said ToD support, and
• responsive to the request, signalling (903) to the client device a response to the trigger for providing support for the ToD.

2. The method of Claim 1, wherein the trigger comprises at least one of: an event of starting or stopping a ToD driving session and a specified event for receiving support from a remote driver; and/or
wherein the information for supporting a ToD comprises at least one of the following:
• a geographical start point and a geographical end point for the ToD ;
• a time start point and a time end point for the ToD ;
• a location trajectory for the vehicle for the ToD ;
• a capability of the vehicle for the ToD ; and
• a status of the vehicle for the ToD ; and/or
wherein the response comprises at least one of: a type of ToD service for providing support for the ToD ; a first indication indicating whether support for the ToD is possible; a second indication indicating whether termination of support for the ToD is possible; and a rejection of the request.

3. The method of any of Claims 1 to 2, further comprising:
• processing (905) the request to identify a second server for providing support for the ToD , wherein the processing is based on parameters of the network for providing ToD support.

4. The method of any of Claims 1 to 2, further comprising:
• processing (907) the request to determine whether the first server can provide support for the ToD , wherein the processing is based on parameters of the network for providing ToD support.

5. The method of any of Claims 3 to 4, wherein the parameters comprise at least one of: quality of service, QoS, related information for the ToD support and whether support for the ToD is available.

6. The method of any of Claims 1 to 5, wherein the response further comprises the parameters.

7. The method of any of Claims 1 to 6, further comprising:
• establishing (909) a ToD driving session when the response comprises an indication that support for the ToD is possible.

8. The method of any of Claims 1 to 7, further comprising:
• predicting (911) whether the ToD is likely in a future time period based on prediction information; and
• signalling (913) the prediction to at least one of the vehicle and control system for ToD driving of the vehicle when the prediction is that the ToD is likely in the future time period;
wherein the future time period preferably comprises at least one of a defined prediction time period and a duration for the ToD ; and
wherein the prediction information preferably comprises at least one of:
• an indication comprising a driver of the vehicle requests to operate the vehicle in a ToD mode;
• an indication comprising information from a sensor of the vehicle;
• an indication comprising map information from the vehicle;
• an indication comprising traffic information; and
• an indication comprising information from a ToD operator; and
wherein the prediction preferably comprises a binary indicator that ToD is needed or that ToD is not needed.

9. The method of Claim 8, further comprising:
• receiving (915) the prediction information from one or more of the vehicle, the second server, a network server, and a third party application server.

10. The method of any of Claims 1 to 9, further comprising:
• deciding (917) whether adaption of a behavior of the vehicle is desired in preparation for the ToD based on the prediction that the ToD is likely in the future time period and adaption information; and
wherein the future time period preferably comprises at least one of the defined prediction time period, a duration for the ToD , and a ToD configuration; and
wherein the adaption information preferably comprises at least one of:
• an indication comprising information about current behavior of the vehicle; and
• an indication of one or more settings of the vehicle.

11. The method of Claim 10, further comprising:
• selecting (919) a remote driver for the ToD when the decision is that adaption of a behavior of the vehicle is desired based on at least information of a ToD service provider; and/or
further comprising:
• selecting (921) a QoS for the network for the ToD based on one or more of information of a ToD service provider and a QoS information of the network.

12. A first server (110, 700) communicatively connected to a network (108) for supporting tele-operated driving, ToD, of a vehicle, the first server comprising:
• at least one processor (703);
• at least one memory (705) connected to the at least one processor 703) and storing program code that is executed by the at least one processor, **characterized in that** it causes the at least one processor to perform operations comprising:
• receiving a request from a client device for a ToD support, wherein the request comprises a trigger and information for supporting the ToD ;
• determining, by a VAE server of the first server (110, 700) a V2X application-specific server for said ToD support, and
• responsive to the request, signalling to the client device a response to the trigger for providing support for the ToD .

13. A computer program comprising program code to be executed by processing circuitry (703) of a first server (110, 700), the first server (110, 700) comprising a VAE server, whereby execution of the program code is **characterized in that** it causes the first server to perform the method in accordance with claim 1.

14. A method performed by a first client device (100a, 800) communicatively connected to a network (108) for supporting tele-operated driving, ToD, of a vehicle, **characterized in that** the method comprising:
• signalling (1001) a request to a first server for a ToD support, the first server (110, 700) comprising a VAE server, wherein the request comprises a trigger and information for supporting the ToD , thereby enabling the VAE server of the first server (110, 700) to determine a V2X application-specific server for said ToD support; and
• responsive to the request, receiving (1003) from the first server a response to the trigger for providing support for the ToD.

15. The method of Claim 14, wherein the trigger comprises at least one of: an event of starting or stopping a ToD driving session and a specified event for receiving support from a remote driver; and/or
wherein the information for supporting a ToD comprises at least one of the following:
• a geographical start point and a geographical end point for the ToD ;
• a time start point and a time end point for the ToD ;
• a location trajectory for the vehicle for the ToD ;
• a capability of the vehicle for the ToD ; and
• a status of the vehicle for the ToD ; and/or
wherein the response comprises at least one of: a type of ToD service for providing support for the ToD ; a first indication indicating whether support for the ToD is possible; a second indication indicating whether termination of support for the ToD is possible; and a rejection of the request.

16. The method of any of Claims 14 to 15, further comprising:
• receiving (1005) a request from a second client device for support for the ToD ; and
• processing (1007) the request from the second client device to identify a server for providing support for the ToD , wherein the processing is based on at least one of a current geographical location of the vehicle and a trajectory for the vehicle; and/or
further comprising:
• processing (1009) the response to identify the second client device that initiated the request; and
• signalling (1011) the response to the second client device; and/or
further comprising:
• establishing (1013) a ToD driving session when the response comprises an indication that support for the ToD is possible.

17. The method of any of Claims 14 to 16, further comprising:
• receiving (1015) a prediction from the server that the ToD is likely in a future time period based on prediction information; and
wherein the future time period preferably comprises at least one of a defined prediction time period and a duration for the ToD ; and
wherein the prediction information preferably comprises at least one of:
• an indication comprising a driver of the vehicle requests to operate the vehicle in a ToD mode;
• an indication comprising information from a sensor of the vehicle;
• an indication comprising map information from the vehicle;
• an indication comprising traffic information; and
• an indication comprising information from a ToD operator; and
wherein the prediction preferably comprises a binary indicator that ToD is needed or that ToD is not needed.

18. The method of any of Claims 14 to16, further comprising:
• predicting (1017) whether the ToD is likely in a future time period based on prediction information; and
• signalling (1019) the prediction to at least one of the vehicle and a control system for ToD driving of the vehicle when the prediction is that the ToD is likely in the future time period; and
wherein the future time period preferably comprises at least one of a defined prediction time period and a duration for the ToD ; and
wherein the prediction information preferably comprises at least one of:
• an indication comprising a driver of the vehicle requests to operate the vehicle in a ToD mode;
• an indication comprising information from a sensor of the vehicle;
• an indication comprising map information from the vehicle;
• an indication comprising traffic information; and
• an indication comprising information from a ToD operator; and
wherein the prediction preferably comprises a binary indicator that ToD is needed or that ToD is not needed.

19. The method of Claim 18, further comprising:
• receiving (1021) the prediction information from one or more of the vehicle, the second server, a network server, and a third party application server.

20. The method of any of Claims 14 to 19, further comprising:
• deciding (1023) whether adaption of a behavior of the vehicle is desired in preparation for the ToD based on the prediction that the ToD is likely in the future time period and adaption information; and
wherein the future time period preferably comprises at least one of the defined prediction time period, a duration for the ToD , and a ToD configuration; and
wherein the adaption information preferably comprises at least one of:
• an indication comprising information about current behavior of the vehicle; and
• an indication of one or more settings of the vehicle.

21. The method of Claim 20 further comprising:
• selecting (1025) at least one vehicle setting before starting an operation for the ToD based on one or more of an indication comprising information from a sensor of the vehicle, an indication comprising map information from the vehicle, an indication comprising traffic information, and an indication comprising information from a ToD operator; and/or
further comprising:
• selecting (1027) a QoS for the network for the ToD based on one or more of information of a ToD service provider and a QoS information of the network.

22. A first client device (100a, 800) communicatively connected to a network (108) for supporting tele-operated driving, ToD, of a vehicle, the first client device comprising:
• at least one processor (803);
• at least one memory (805) connected to the at least one processor 703) and storing program code that is executed by the at least one processor, characterized that is causes the at least one processor to perform operations comprising:
• signalling a request to a first server for a ToD support, the first server (110, 700) comprising a VAE server, wherein the request comprises a trigger and information for supporting the ToD , thereby enabling the VAE server of the first server (110, 700) to determine a V2X application-specific server for said ToD support; and
• responsive to the request, receiving from the first server a response to the trigger for providing support for the ToD.

23. A computer program comprising program code to be executed by processing circuitry (803) of a first client device (800), whereby execution of the program code causes the first client device to perform operations according to any of Claims 14 to 21.

## Patentansprüche

1. Verfahren, das durch einen ersten Server (110, 700) durchgeführt wird, der kommunikativ mit einem Netzwerk (108) zum Unterstützen von telebetriebenem Fahren, ToD, eines Fahrzeugs verbunden ist, wobei der erste Server (110, 700) einen VAE-Server umfasst, **dadurch gekennzeichnet, dass** das Verfahren Folgendes umfasst:
• Empfangen (901) einer Anforderung von einer Client-Vorrichtung für eine ToD-Unterstützung, wobei die Anforderung einen Auslöser und Informationen zum Unterstützen des ToD umfasst;
• Bestimmen, durch einen VAE-Server des ersten Servers (110, 700), eines V2X-anwendungsspezifischen Servers für die ToD-Unterstützung, und
• als Reaktion auf die Anforderung, Signalisieren (903), an die Client-Vorrichtung, einer Antwort auf den Auslöser zum Bereitstellen von Unterstützung für das ToD.

2. Verfahren nach Anspruch 1, wobei der Auslöser mindestens eines von Folgendem umfasst: ein Ereignis eines Startens oder eines Stoppens einer ToD-Fahrsitzung und ein vorgegebenes Ereignis zum Empfangen von Unterstützung von einem entfernten Fahrer; und/oder
wobei die Informationen zum Unterstützen eines ToD mindestens eines von Folgendem umfassen:
• einen geografischen Startpunkt und einen geografischen Endpunkt für das ToD;
• einen zeitlichen Startpunkt und einen zeitlichen Endpunkt für das ToD;
• eine Standorttrajektorie für das Fahrzeug für das ToD;
• eine Fähigkeit des Fahrzeugs für das ToD; und
• einen Status des Fahrzeugs für das ToD; und/oder
wobei die Antwort mindestens eines von Folgendem umfasst: eine Art von ToD-Dienst zum Bereitstellen von Unterstützung für das ToD; eine erste Angabe, die angibt, ob Unterstützung für das ToD möglich ist; eine zweite Angabe, die angibt, ob eine Beendigung von Unterstützung für das ToD möglich ist; und eine Ablehnung der Anforderung.

3. Verfahren nach einem der Ansprüche 1 bis 2, ferner umfassend:
• Verarbeiten (905) der Anforderung, um einen zweiten Server zum Bereitstellen von Unterstützung für das ToD zu identifizieren, wobei das Verarbeiten auf Parametern des Netzwerks zum Bereitstellen von ToD-Unterstützung basiert.

4. Verfahren nach einem der Ansprüche 1 bis 2, ferner umfassend:
• Verarbeiten (907) der Anforderung, um zu bestimmen, ob der erste Server Unterstützung support für das ToD bereitstellen kann, wobei das Verarbeiten auf Parametern des Netzwerks zum Bereitstellen von ToD-Unterstützung basiert.

5. Verfahren nach einem der Ansprüche 3 bis 4, wobei die Parameter mindestens eines von Folgendem umfassen: Informationen bezogen auf die Dienstgüte, QoS, für die ToD-Unterstützung und ob Unterstützung für das ToD verfügbar ist.

6. Verfahren nach einem der Ansprüche 1 bis 5, wobei die Antwort ferner die Parameter umfasst.

7. Verfahren nach einem der Ansprüche 1 bis 6, ferner umfassend:
• Aufbauen (909) einer ToD-Fahrsitzung, wenn die Antwort eine Angabe umfasst, dass Unterstützung für das ToD möglich ist.

8. Verfahren nach einem der Ansprüche 1 bis 7, ferner umfassend:
• Vorhersagen (911), ob das ToD in einem zukünftigen Zeitraum basierend auf Vorhersageinformationen wahrscheinlich ist; und
• Signalisieren (913) der Vorhersage an mindestens eines von dem Fahrzeug und dem Steuersystem zum ToD-Fahren des Fahrzeugs, wenn die Vorhersage lautet, dass das ToD in dem zukünftigen Zeitraum wahrscheinlich ist;
wobei der zukünftige Zeitraum vorzugsweise mindestens eines von einem definierten Vorhersagezeitraum und einer Dauer für das ToD umfasst; und
wobei die Vorhersageinformationen vorzugsweise mindestens eines von Folgendem umfassen:
• eine Angabe, die umfasst, dass ein Fahrer des Fahrzeugs anfordert, das Fahrzeug in einem ToD-Modus zu betreiben;
• eine Angabe, die Informationen von einem Sensor des Fahrzeugs umfasst;
• eine Angabe, die Karteninformationen von dem Fahrzeug umfasst;
• eine Angabe, die Verkehrsinformationen umfasst; und
• eine Angabe, die Informationen von einem ToD-Betreiber umfasst; und
wobei die Vorhersage vorzugsweise einen binären Indikator dafür umfasst, dass ToD erforderlich ist oder dass ToD nicht erforderlich ist.

9. Verfahren nach Anspruch 8, ferner umfassend:
• Empfangen (915) der Vorhersageinformationen von einem oder mehreren von dem Fahrzeug, dem zweiten Server, einem Netzwerkserver und einem Anwendungsserver eines Dritten.

10. Verfahren nach einem der Ansprüche 1 bis 9, ferner umfassend:
• Entscheiden (917), ob eine Adaption eines Verhaltens des Fahrzeugs in Vorbereitung auf das ToD gewünscht ist, basierend auf der Vorhersage, dass das ToD in dem zukünftigen Zeitraum wahrscheinlich ist, und Adaptionsinformationen; und
wobei der zukünftige Zeitraum vorzugsweise mindestens eines von dem definierten Vorhersagezeitraum, einer Dauer für das ToD, und einer ToD-Konfiguration umfasst; und
wobei die Adaptionsinformationen vorzugsweise mindestens eines von Folgendem umfassen:
• eine Angabe, die Informationen über ein aktuelles Verhalten des Fahrzeugs umfasst; und
• eine Angabe einer oder mehrerer Einstellungen des Fahrzeugs.

11. Verfahren nach Anspruch 10, ferner umfassend:
• Auswählen (919) eines entfernten Fahrers für das ToD, wenn die Entscheidung lautet, dass eine Adaption eines Verhaltens des Fahrzeugs gewünscht ist, basierend auf mindestens Informationen eines ToD-Dienstanbieters; und/oder
ferner umfassend:
• Auswählen (921) einer QoS für das Netzwerk für das ToD basierend auf einer oder mehreren Informationen eines ToD-Dienstanbieters und einer QoS-Information des Netzwerks.

12. Erster Server (110, 700), der kommunikativ mit einem Netzwerk (108) zum Unterstützen von telebetriebenem Fahren, ToD, eines Fahrzeugs verbunden ist, wobei der erste Server Folgendes umfasst:
• mindestens einen Prozessor (703);
• mindestens einen Speicher (705), der mit dem mindestens einen Prozessor (703) verbunden ist und Programmcode speichert, der durch den mindestens einen Prozessor ausgeführt wird, **dadurch gekennzeichnet, dass** er den mindestens einen Prozessor dazu veranlasst, Vorgänge durchzuführen, die Folgendes umfassen:
• Empfangen einer Anforderung von einer Client-Vorrichtung für eine ToD-Unterstützung, wobei die Anforderung einen Auslöser und Informationen zum Unterstützen des ToD umfasst;
• Bestimmen, durch einen VAE-Server des ersten Servers (110, 700), eines V2X-anwendungsspezifischen Servers für die ToD-Unterstützung, und
• als Reaktion auf die Anforderung, Signalisieren, an die Client-Vorrichtung, einer Antwort auf den Auslöser zum Bereitstellen von Unterstützung für das ToD.

13. Computerprogramm, das Programmcode umfasst, der durch eine Verarbeitungsschaltung (703) eines ersten Servers (110, 700) auszuführen ist, wobei der erste Server (110, 700) einen VAE-Server umfasst, wobei eine Ausführung des Programmcodes **dadurch gekennzeichnet ist, dass** sie den ersten Server dazu veranlasst, das Verfahren nach Anspruch 1 durchzuführen.

14. Verfahren, das durch eine erste Client-Vorrichtung (100a, 800) durchgeführt wird, die kommunikativ mit einem Netzwerk (108) zum Unterstützen von telebetriebenem Fahren, ToD, eines Fahrzeugs verbunden ist, **dadurch gekennzeichnet, dass** das Verfahren Folgendes umfasst:
• Signalisieren (1001) einer Anforderung an einen ersten Server für eine ToD-Unterstützung, wobei der erste Server (110, 700) einen VAE-Server umfasst, wobei die Anforderung einen Auslöser und Informationen zum Unterstützen des ToD umfasst, wodurch es dem VAE-Server des ersten Servers (110, 700) ermöglicht wird, einen V2X-anwendungsspezifischen Server für die ToD-Unterstützung zu bestimmen; und
• als Reaktion auf die Anforderung, Empfangen (1003), von dem ersten Server, einer Antwort auf den Auslöser zum Bereitstellen von Unterstützung für das ToD.

15. Verfahren nach Anspruch 14, wobei der Auslöser mindestens eines von Folgendem umfasst: ein Ereignis eines Startens oder eines Stoppens einer ToD-Fahrsitzung und ein vorgegebenes Ereignis zum Empfangen von Unterstützung von einem entfernten Fahrer; und/oder
wobei die Informationen zum Unterstützen eines ToD mindestens eines der Folgenden umfassen:
• einen geographischen Startpunkt und einen geographischen Endpunkt für das ToD;
• einen zeitlichen Startpunkt und einen zeitlichen Endpunkt für das ToD;
• eine Standorttrajektorie für das Fahrzeug für das ToD;
• eine Fähigkeit des Fahrzeugs für das ToD; und
• einen Status des Fahrzeugs für das ToD; und/oder
wobei die Antwort mindestens eines von Folgendem umfasst: eine Art von ToD-Dienst zum Bereitstellen von Unterstützung für das ToD; eine erste Angabe, die angibt, ob Unterstützung für das ToD möglich ist; eine zweite Angabe, die angibt, ob eine Beendigung von Unterstützung für das ToD möglich ist; und eine Ablehnung der Anforderung.

16. Verfahren nach einem der Ansprüche 14 bis 15, ferner umfassend:
• Empfangen (1005) einer Anforderung von einer zweiten Client-Vorrichtung zur Unterstützung für das ToD; und
• Verarbeiten (1007) der Anforderung von der zweiten Client-Vorrichtung, um einen Server zum Bereitstellen von Unterstützung für das ToD zu identifizieren, wobei das Verarbeiten auf mindestens einem von einem aktuellen geographischen Standort des Fahrzeugs und einer Trajektorie für das Fahrzeug basiert; und/oder
ferner umfassend:
• Verarbeiten (1009) der Antwort, um die zweite Client-Vorrichtung, welche die Anforderung initiiert hat, zu identifizieren; und
• Signalisieren (1011) der Antwort an die zweite Client-Vorrichtung; und/oder
ferner umfassend:
• Aufbauen (1013) einer ToD-Fahrsitzung, wenn die Antwort eine Angabe umfasst, dass Unterstützung für das ToD möglich ist.

17. Verfahren nach einem der Ansprüche 14 bis 16, ferner umfassend:
• Empfangen (1015) einer Vorhersage von dem Server, dass das ToD in einem zukünftigen Zeitraum basierend auf Vorhersageinformationen wahrscheinlich ist; und
wobei der zukünftige Zeitraum vorzugsweise mindestens eines von einem definierten Vorhersagezeitraum und einer Dauer für das ToD umfasst; und
wobei die Vorhersageinformationen vorzugsweise mindestens eines von Folgendem umfassen:
• eine Angabe, die umfasst, dass ein Fahrer des Fahrzeugs anfordert, das Fahrzeug in einem ToD-Modus zu betreiben;
• eine Angabe, die Informationen von einem Sensor des Fahrzeugs umfasst;
• eine Angabe, die Karteninformationen von dem Fahrzeug umfasst;
• eine Angabe, die Verkehrsinformationen umfasst; und
• eine Angabe, die Informationen von einem ToD-Betreiber umfasst; und
wobei die Vorhersage vorzugsweise einen binären Indikator dafür umfasst, dass ToD erforderlich ist oder dass ToD nicht erforderlich ist.

18. Verfahren nach einem der Ansprüche 14 bis 16, ferner umfassend:
• Vorhersagen (1017), ob das ToD in einem zukünftigen Zeitraum basierend auf Vorhersageinformationen wahrscheinlich ist; und
• Signalisieren (1019) der Vorhersage an mindestens eines von dem Fahrzeug und einem Steuersystem zum ToD-Fahren des Fahrzeugs, wenn die Vorhersage lautet, dass das ToD in dem zukünftigen Zeitraum wahrscheinlich ist; und
wobei der zukünftige Zeitraum vorzugsweise mindestens eines von einem definierten Vorhersagezeitraum und einer Dauer für das ToD umfasst; und
wobei die Vorhersageinformationen vorzugsweise mindestens eines von Folgendem umfassen:
• eine Angabe, die umfasst, dass ein Fahrer des Fahrzeugs anfordert, das Fahrzeug in einem ToD-Modus zu betreiben;
• eine Angabe, die Informationen von einem Sensor des Fahrzeugs umfasst;
• eine Angabe, die Karteninformationen von dem Fahrzeug umfasst;
• eine Angabe, die Verkehrsinformationen umfasst; und
• eine Angabe, die Informationen von einem ToD-Betreiber umfasst; und
wobei die Vorhersage vorzugsweise einen binären Indikator dafür umfasst, dass ToD erforderlich ist oder dass ToD nicht erforderlich ist.

19. Verfahren nach Anspruch 18, ferner umfassend:
• Empfangen (1021) der Vorhersageinformationen von einem oder mehreren von dem Fahrzeug, dem zweiten Server, einem Netzwerkserver und einem Anwendungsserver eines Dritten.

20. Verfahren nach einem der Ansprüche 14 bis 19, ferner umfassend:
• Entscheiden (1023), ob eine Adaption eines Verhaltens des Fahrzeugs in Vorbereitung auf das ToD gewünscht ist, basierend auf der Vorhersage, dass das ToD in dem zukünftigen Zeitraum wahrscheinlich ist, und Adaptionsinformationen; und
wobei der zukünftige Zeitraum vorzugsweise mindestens eines von dem definierten Vorhersagezeitraum, einer Dauer für das ToD, und einer ToD-Konfiguration umfasst; und
wobei die Adaptionsinformationen vorzugsweise mindestens eines von Folgendem umfassen:
• eine Angabe, die Informationen über ein aktuelles Verhalten des Fahrzeugs umfasst; und
• eine Angabe einer oder mehrerer Einstellungen des Fahrzeugs.

21. Verfahren nach Anspruch 20 ferner umfassend:
• Auswählen (1025) mindestens einer Fahrzeugeinstellung vor einem Starten eines Vorgangs für das ToD basierend auf einer oder mehreren einer Angabe, die Informationen von einem Sensor des Fahrzeugs umfasst, einer Angabe, die Karteninformationen von dem Fahrzeug umfasst, einer Angabe, die Verkehrsinformationen umfasst, und einer Angabe, die Informationen von einem ToD-Betreiber umfasst; und/oder
ferner umfassend:
• Auswählen (1027) einer QoS für das Netzwerk für das ToD basierend auf einer oder mehreren Informationen eines ToD-Dienstanbieters und einer QoS-Information des Netzwerks.

22. Erste Client-Vorrichtung (100a, 800), die kommunikativ mit einem Netzwerk (108) zum Unterstützen von telebetriebenem Fahren, ToD, eines Fahrzeugs verbunden ist, wobei die erste Client-Vorrichtung Folgendes umfasst:
• mindestens einen Prozessor (803);
• mindestens einen Speicher (805), der mit dem mindestens einen Prozessor (703) verbunden ist und Programmcode speichert, der durch den mindestens einen Prozessor ausgeführt wird, **dadurch gekennzeichnet, dass** er den mindestens einen Prozessor dazu veranlasst, Vorgänge durchzuführen, die Folgendes umfassen:
• Signalisieren einer Anforderung an einen ersten Server für eine ToD-Unterstützung, wobei der erste Server (110, 700) einen VAE-Server umfasst, wobei die Anforderung einen Auslöser und Informationen zum Unterstützen des ToD umfasst, wodurch es dem VAE-Server des ersten Servers (110, 700) ermöglicht wird, einen V2X-anwendungsspezifischen Server für die ToD-Unterstützung zu bestimmen; und
• als Reaktion auf die Anforderung, Empfangen, von dem ersten Server, einer Antwort auf den Auslöser zum Bereitstellen von Unterstützung für das ToD.

23. Computerprogramm, das Programmcode umfasst, der durch eine Verarbeitungsschaltung (803) einer ersten Client-Vorrichtung (800) auszuführen ist, wobei eine Ausführung des Programmcodes die erste Client-Vorrichtung dazu veranlasst, Vorgänge nach einem der Ansprüche 14 bis 21 durchzuführen.

## Revendications

1. Procédé exécuté par un premier serveur (110, 700) connecté de manière communicative à un réseau (108) pour prendre en charge la conduite télécommandée, ToD, d'un véhicule, le premier serveur (110, 700) comprenant un serveur VAE, **caractérisé en ce que** le procédé comprenant :
• la réception (901) d'une demande d'un dispositif client pour une prise en charge de la ToD, dans lequel la demande comprend un déclencheur et des informations pour prendre en charge la ToD ;
• la détermination, par le serveur VAE du premier serveur (110, 700), d'un serveur spécifique à l'application V2X pour ladite prise en charge de la ToD, et
• en réponse à la demande, le signalement (903) au dispositif client d'une réponse au déclencheur pour fournir une prise en charge de la ToD.

2. Procédé selon la revendication 1, dans lequel le déclencheur comprend au moins l'un des éléments suivants : un événement de démarrage ou d'arrêt d'une session de conduite ToD et un événement spécifié pour recevoir une prise en charge d'un conducteur distant ; et/ou
dans lequel les informations pour prendre en charge une ToD comprennent au moins l'un des éléments suivants :
• un point de départ géographique et un point d'arrivée géographique pour la ToD ;
• un point de départ temporel et un point de fin temporel pour la ToD ;
• une trajectoire de localisation du véhicule pour la ToD ;
• une capacité du véhicule pour la ToD ; et
• un statut du véhicule pour la ToD ; et/ou
Dans lequel la réponse comprend au moins l'un des éléments suivants : un type de service de ToD pour fournir une prise en charge de la ToD ; une première indication indiquant si la prise en charge de la ToD est possible ; une seconde indication indiquant si la fin de la prise en charge de la ToD est possible ; et un rejet de la demande.

3. Procédé selon l'une quelconque des revendications 1 à 2, comprenant en outre :
• le traitement (905) de la demande pour identifier un second serveur pour fournir une prise en charge de la ToD, dans lequel le traitement est basé sur des paramètres du réseau pour fournir une prise en charge de la ToD.

4. Procédé selon l'une quelconque des revendications 1 et 2, comprenant en outre :
• le traitement (907) de la demande pour déterminer si le premier serveur peut fournir une prise en charge de la ToD, dans lequel le traitement est basé sur des paramètres du réseau pour fournir une prise en charge de la ToD.

5. Procédé selon l'une quelconque des revendications 3 et 4, dans lequel les paramètres comprennent au moins l'une parmi : la qualité de service, QoS, les informations associées pour la prise en charge de ToD et si la prise en charge de la ToD est disponible.

6. Procédé selon l'une quelconque des revendications 1 à 5, dans lequel la réponse comprend en outre les paramètres.

7. Procédé selon l'une quelconque des revendications 1 à 6, comprenant en outre :
• l'établissement (909) d'une session de conduite ToD lorsque la réponse comprend une indication selon laquelle la prise en charge de la ToD est possible.

8. Procédé selon l'une quelconque des revendications 1 à 7, comprenant en outre :
• le fait de prédire (911) si la ToD est probable dans une période de temps future sur la base d'informations de prédiction ; et
• le signalement (913) de la prédiction à au moins l'un parmi le véhicule et le système de commande pour la conduite ToD du véhicule lorsque la prédiction est que la ToD est probable dans la période de temps future ;
dans lequel la période de temps future comprend de préférence au moins l'une parmi une période de temps de prédiction définie et une durée pour la ToD ; et
dans lequel les informations de prédiction comprennent de préférence au moins l'un des éléments suivants :
• une indication comprenant le fait qu'un conducteur du véhicule demande à faire fonctionner le véhicule dans un mode de ToD ;
• une indication comprenant des informations provenant d'un capteur du véhicule ;
• une indication comprenant des informations cartographiques provenant du véhicule ;
• une indication comprenant des informations de trafic ; et
• une indication comprenant des informations provenant d'un opérateur de ToD ; et
dans lequel la prédiction comprend de préférence un indicateur binaire indiquant que la ToD est nécessaire ou que la ToD n'est pas nécessaire.

9. Procédé selon la revendication 8, comprenant en outre :
• la réception (915) des informations de prédiction provenant d'un ou de plusieurs éléments parmi le véhicule, le second serveur, un serveur de réseau et un serveur d'applications tiers.

10. Procédé selon l'une quelconque des revendications 1 à 9, comprenant en outre :
• le fait de décider (917) si une adaptation d'un comportement du véhicule est souhaitée en préparation pour la ToD sur la base de la prédiction selon laquelle la ToD est probable dans la période de temps future et des informations d'adaptation ; et
dans lequel la période de temps future comprend de préférence au moins l'une parmi la période de temps de prédiction définie, une durée pour la ToD, et une configuration de la ToD ; et
dans lequel les informations d'adaptation comprennent de préférence au moins l'un des éléments suivants :
• une indication comprenant des informations sur le comportement actuel du véhicule ; et
• une indication d'un ou plusieurs réglages du véhicule.

11. Procédé selon la revendication 10, comprenant en outre :
• la sélection (919) d'un conducteur distant pour la ToD lorsque la décision est qu'une adaptation d'un comportement du véhicule est souhaitée sur la base au moins d'informations d'un fournisseur de services de ToD ; et/ou
comprenant en outre :
• la sélection (921) d'une QoS pour le réseau de la ToD sur la base d'une ou plusieurs parmi des informations d'un fournisseur de services de ToD et des informations de QoS du réseau.

12. Premier serveur (110, 700) connecté en communication à un réseau (108) pour prendre en charge la conduite télécommandée, ToD, d'un véhicule, le premier serveur comprenant :
• au moins un processeur (703) ;
• au moins une mémoire (705) connectée à l'au moins un processeur (703) et stockant le code de programme qui est exécuté par l'au moins un processeur, **caractérisé en ce qu'**il amène l'au moins un processeur à effectuer des opérations comprenant :
• la réception d'une demande d'un dispositif client pour une prise en charge de ToD, dans lequel la demande comprend un déclencheur et des informations pour prendre en charge la ToD ;
• la détermination, par un serveur VAE du premier serveur (110, 700), d'un serveur spécifique à l'application V2X pour ladite prise en charge de la ToD, et
• en réponse à la demande, le signalement au dispositif client d'une réponse au déclencheur pour fournir une prise en charge de la ToD.

13. Programme informatique comprenant un code de programme devant être exécuté par des circuits de traitement (703) d'un premier serveur (110, 700), le premier serveur (110, 700) comprenant un serveur VAE, moyennant quoi l'exécution du code de programme est **caractérisée en ce qu'**elle amène le premier serveur à exécuter le procédé selon la revendication 1.

14. Procédé exécuté par un premier dispositif client (100a, 800) connecté en communication à un réseau (108) pour prendre en charge la conduite télécommandée, ToD, d'un véhicule, **caractérisé en ce que** le procédé comprend :
• le signalement (1001) d'une demande à un premier serveur pour une prise en charge de ToD, le premier serveur (110, 700) comprenant un serveur VAE, dans lequel la demande comprend un déclencheur et des informations pour prendre en charge la ToD, permettant ainsi au serveur VAE du premier serveur (110, 700) de déterminer un serveur spécifique à l'application V2X pour ladite prise en charge de la ToD ; et
• en réponse à la demande, la réception (1003) provenant du premier serveur d'une réponse au déclencheur pour fournir une prise en charge de la ToD.

15. Procédé selon la revendication 14, dans lequel le déclencheur comprend au moins l'un des éléments suivants : un événement de démarrage ou d'arrêt d'une session de conduite ToD et un événement spécifié pour recevoir une prise en charge d'un conducteur distant ; et/ou
dans lequel les informations pour prendre en charge une ToD comprennent au moins l'un des éléments suivants :
• un point de départ géographique et un point d'arrivée géographique pour la ToD ;
• un point de départ temporel et un point de fin temporel pour la ToD ;
• une trajectoire de localisation du véhicule pour la ToD ;
• une capacité du véhicule pour la ToD ; et
• un statut du véhicule pour la ToD ; et/ou
dans lequel la réponse comprend au moins l'un des éléments suivants : un type de service de ToD pour fournir une prise en charge de la ToD ; une première indication indiquant si la prise en charge de la ToD est possible ; une seconde indication indiquant si la fin de la prise en charge de la ToD est possible ; et un rejet de la demande.

16. Procédé selon l'une quelconque des revendications 14 et 15, comprenant en outre :
• la réception (1005) d'une demande provenant d'un second dispositif client pour la prise en charge de la ToD ; et
• le traitement (1007) de la demande provenant du second dispositif client pour identifier un serveur pour fournir une prise en charge de la ToD, dans lequel le traitement est basé sur au moins un emplacement géographique actuel du véhicule et une trajectoire du véhicule ; et/ou
comprenant en outre :
• le traitement (1009) de la réponse pour identifier le second dispositif client qui a initié la demande ; et
• le signalement (1011) de la réponse au second dispositif client ; et/ou
comprenant en outre :
• l'établissement (1013) d'une session de conduite ToD lorsque la réponse comprend une indication selon laquelle la prise en charge de la ToD est possible.

17. Procédé selon l'une quelconque des revendications 14 à 16, comprenant en outre :
• la réception (1015) d'une prédiction du serveur selon laquelle la ToD est probable dans une période de temps future sur la base d'informations de prédiction ; et
dans lequel la période de temps future comprend de préférence au moins l'une parmi une période de temps de prédiction définie et une durée pour la ToD ; et
dans lequel les informations de prédiction comprennent de préférence au moins l'un des éléments suivants :
• une indication comprenant le fait qu'un conducteur du véhicule demande à faire fonctionner le véhicule dans un mode de ToD ;
• une indication comprenant des informations provenant d'un capteur du véhicule ;
• une indication comprenant des informations cartographiques provenant du véhicule ;
• une indication comprenant des informations de trafic ; et
• une indication comprenant des informations provenant d'un opérateur de ToD ; et
la prédiction comprenant de préférence un indicateur binaire indiquant que la ToD est nécessaire ou que la ToD n'est pas nécessaire.

18. Procédé selon l'une quelconque des revendications 14 à 16, comprenant en outre :
• le fait de prédire (1017) si la ToD est probable dans une période de temps future sur la base d'informations de prédiction ; et
• le signalement (1019) de la prédiction à au moins l'un parmi le véhicule et un système de commande pour la ToD du véhicule lorsque la prédiction est que la ToD est probable dans la période de temps future ; et
dans lequel la période de temps future comprend de préférence au moins l'une parmi une période de temps de prédiction définie et une durée pour la ToD ; et
dans lequel les informations de prédiction comprennent de préférence au moins l'un des éléments suivants :
• une indication comprenant un conducteur du véhicule demande à faire fonctionner le véhicule dans un mode de ToD ;
• une indication comprenant des informations provenant d'un capteur du véhicule ;
• une indication comprenant des informations cartographiques provenant du véhicule ;
• une indication comprenant des informations de trafic ; et
• une indication comprenant des informations provenant d'un opérateur de ToD ; et
dans lequel la prédiction comprend de préférence un indicateur binaire indiquant que la ToD est nécessaire ou que la ToD n'est pas nécessaire.

19. Procédé selon la revendication 18, comprenant en outre :
• la réception (1021) des informations de prédiction provenant d'un ou plusieurs éléments parmi le véhicule, le second serveur, un serveur de réseau et un serveur d'applications tiers.

20. Procédé selon l'une quelconque des revendications 14 à 19, comprenant en outre :
• le fait de décider (1023) si une adaptation d'un comportement du véhicule est souhaitée en préparation de la ToD sur la base de la prédiction selon laquelle la ToD est probable dans la période de temps future et des informations d'adaptation ; et
dans lequel la période de temps future comprend de préférence au moins l'une parmi la période de temps de prédiction définie, une durée pour la ToD, et une configuration de la ToD ; et
dans lequel les informations d'adaptation comprennent de préférence au moins l'un des éléments suivants :
• une indication comprenant des informations sur le comportement actuel du véhicule ; et
• une indication d'un ou plusieurs réglages du véhicule.

21. Procédé selon la revendication 20 comprenant en outre :
• la sélection (1025) d'au moins un réglage de véhicule avant de démarrer une opération pour la ToD sur la base d'une ou plusieurs indications comprenant des informations provenant d'un capteur du véhicule, une indication comprenant des informations cartographiques provenant du véhicule, une indication comprenant des informations de trafic, et une indication comprenant des informations provenant d'un opérateur de ToD ; et/ou
comprenant en outre :
• la sélection (1027) d'une QoS du réseau pour la ToD sur la base d'une ou plusieurs informations d'un fournisseur de services de ToD et d'informations de qualité de service du réseau.

22. Premier dispositif client (100a, 800) connecté en communication à un réseau (108) pour prendre en charge la conduite télécommandée, ToD, d'un véhicule, le premier dispositif client comprenant :
• au moins un processeur (803) ;
• au moins une mémoire (805) connectée à l'au moins un processeur (703) et stockant un code de programme qui est exécuté par l'au moins un processeur, **caractérisé en ce qu'**il amène l'au moins un processeur à effectuer des opérations comprenant :
• le signalement d'une demande à un premier serveur pour une prise en charge de ToD, le premier serveur (110, 700) comprenant un serveur VAE, la demande comprenant un déclencheur et des informations pour prendre en charge la ToD, activant ainsi le serveur VAE du premier serveur (110, 700) pour déterminer un serveur spécifique à l'application V2X pour ledit support de ToD ; et
• en réponse à la demande, la réception provenant du premier serveur d'une réponse au déclencheur pour fournir la prise en charge de la ToD.

23. Programme informatique comprenant un code de programme devant être exécuté par des circuits de traitement (803) d'un premier dispositif client (800), moyennant quoi l'exécution du code de programme amène le premier dispositif client à effectuer des opérations selon l'une quelconque des revendications 14 à 21.
